(19)

Europäisches
Patentamt
European
Patent Office
Office européen
des brevets

(11) **EP 4 060 518 A1**

(12) **EUROPEAN PATENT APPLICATION**

(43) Date of publication:
**21.09.2022 Bulletin 2022/38**

(21) Application number: **21195572.9**

(22) Date of filing: **08.09.2021**

(51) International Patent Classification (IPC):
***G06F 16/335*** (2019.01)　　　***G06F 16/93*** (2019.01)

(52) Cooperative Patent Classification (CPC):
**G06F 16/93; G06F 16/337**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2021  JP 2021046446
19.03.2021  JP 2021046447**

(71) Applicant: **Fujifilm Business Innovation Corp.
Tokyo 107-0052 (JP)**

(72) Inventor: **SAKATA, Yui
Kanagawa, 220-8668 (JP)**

(74) Representative: **Parker, Andrew James
Meissner Bolte Patentanwälte
Rechtsanwälte Partnerschaft mbB
Postfach 86 06 24
81633 München (DE)**

(54) **INFORMATION PROCESSING APPARATUS AND INFORMATION PROCESSING PROGRAM**

(57) An information processing apparatus includes a processor configured to: display an operator associated with an extracting operation to extract plural documents stored in a storage area from the storage area, each of the plural documents being associated with an attribute in advance; and associate the operator with a classifying operation to classify the plural documents stored in the storage area and the extracting operation using an item that changes according to the attribute of each of the plural documents stored in the storage area.

*FIG. 10*

**Description**

BACKGROUND

Technical Field

The present disclosure relates to an information processing apparatus and an information processing program.

Related Art

Japanese Patent No. 6357754 discloses a file management apparatus capable of finding a document file according to a situation from a large number of document files having different urgency or priority. The file management apparatus includes a storage unit configured to store a uniquely set identifier in a shared area in association with a document file each time the document file is stored in the shared area, and a display control unit configured to perform control such that, when a representative image specifying a document file is displayed, a representational image corresponding to an identifier stored in association with the document file by the storage unit is displayed together with the representative image.

JP-A-2005-4419 discloses a file browsing apparatus that displays a list of files and folders managed in a hierarchical structure. The file browsing apparatus includes a unit configured to display image contents of files included in the same hierarchy as thumbnails, a unit configured to display subfolders in a lower hierarchy as icons, a unit configured to display thumbnails indicating image contents of files included in the subfolders on the icons of the subfolders, a unit configured to enlarge and reduce an icon size of the subfolders, and a unit configured to increase and decrease the number of thumbnails of the files in the subfolders displayed on the icons of the subfolders in accordance with the enlargement or reduction of the icon size.

SUMMARY

There is a document management system including a file server and plural clients. The file server and the plural clients transmit and receive documents via, for example, a "tray" that is present in the file server and functions as a storage area that can be shared by the plural clients.

Each of the clients displays a work area including the tray, and plural documents stored in the tray are extracted from the tray to the work area for work. As a method for extracting a document, for example, a document associated with a sender (transmission source) of the document can be extracted from the tray. However, the method for extracting a document is fixed, and thus it may be difficult for a user to extract a desired document from the tray.

Aspects of non-limiting embodiments of the present disclosure relate to an information processing apparatus and an information processing program to enable extraction of documents in a variable manner according to the documents stored in a storage area.

[1] According to an aspect of the present disclosure, there is provided an information processing apparatus including a processor configured to: display an operator associated with an extracting operation to extract plural documents stored in a storage area from the storage area, each of the plural documents being associated with an attribute in advance; and associate the operator with a classifying operation to classify the plural documents stored in the storage area and the extracting operation using an item that changes according to the attribute of each of the plural documents stored in the storage area.

[2] In the information processing apparatus according to [1], the operator may indicate a label name indicating the item, and the processor may be configured to change the label name of the operator in accordance with a change in the item.

[3] In the information processing apparatus according to [1], the processor may be configured to display, in a main work area in which a document is arranged and a work is performed on the arranged document, a sub work area that includes a document for each item extracted by an operation with the operator and that is smaller than the main work area.

[4] In the information processing apparatus according to [3], the processor may be configured to display the sub work area arranged in a vicinity of a document that is arranged in the main work area and that has an attribute similar to an attribute of the document included in the sub work area.

[5] In the information processing apparatus according to [4], in a case where there is no area for arranging the sub work area in the vicinity of the document arranged in the main work area, the processor may be configured to display the sub work area arranged in a free area in the main work area and a message indicating that the sub work area is arranged in the free area in the main work area.

[6] In the information processing apparatus according to any one of [3] to [5], the processor may be configured to display an image representing the storage area in the main work area so as to be selectable.

[7] According to another aspect of the present disclosure, there is provided an information processing program causing a computer to execute a process, the process including: displaying an operator associated with an extracting operation to extract plural documents stored in a storage area from the storage area, each of the plural documents being associated with an attribute in advance; and associating the operator with a classifying operation to classify the plural documents stored in the storage area and the extracting operation using an item that changes according to the attribute of each of the plural documents stored in the storage area.

[8] According to another aspect of the present disclosure, there is provided an information processing apparatus including a processor configured to: extract a document from a storage area in which plural documents are stored, each of the plural documents being associated with an attribute in advance, and display a sub work area including the extracted document arranged in a vicinity of a document that is arranged in a main work area larger than the sub work area and has an attribute similar to an attribute of the document included in the sub work area.

[9] In the information processing apparatus according to [8], the processor may be configured to extract, from the storage area, a document classified for each item according to an attribute of each of the plural documents, and the sub work area includes the extracted document for each item.

[10] In the information processing apparatus according to [9], the processor may be configured to display an operator associated with an operation of extracting a document from the storage area for each item, the operator being configured to display a label name indicating the item, and the sub work area may include the document for each item that is extracted by an operation of the operator.

[11] In the information processing apparatus according to [2] or [9], in a case where the number of items is larger than a maximum number of items that is allocatable to the operator, the processor may be configured to display, on the operator, a label name indicating at least one item selected from the items in descending order of priority of the items.

[12] In the information processing apparatus according to [3] or [10], the attribute may include an attribute name and plural types of attribute values, and the processor may be configured to acquire, from the storage area, the number of classifiable documents for each attribute name and an index value indicating a degree of variation of the plural types of attribute values for each attribute name, and determine the priority of the items based on at least one of the number of classifiable documents for each attribute name and the index value acquired for each attribute name.

[13] In the information processing apparatus according to [3] or [10], the attribute may include an attribute name and plural types of attribute values, the storage area may be accessible by plural users, and the processor may be configured to acquire an operation history of each user indicating the number of times the user performs the extracting operation for the attribute name of the document, from all storage area accessible by a user that is accessing the storage area, and determine the priority of the items based on the acquired operation history of each user.

[14] In the information processing apparatus according to [3] or [10], the attribute may include an attribute name and plural types of attribute values, the storage area may be accessible by plural users, and the processor may be configured to acquire an operation history of each user indicating the number of times the user performs the extracting operation for the attribute name of the document, from all storage area accessible by a user that is accessing the storage area, acquire an operation history of each storage area indicating the number of times the extracting operation is performed for the attribute name of the document, from each storage area, and determine the priority of the items based on the acquired operation history of each user and the acquired operation history of each storage area.

[15] In the information processing apparatus according to [3] or [10], the attribute may include an attribute name and plural types of attribute values, the storage area may be accessible by plural users, the processor may be configured to acquire, from the storage area, the number of classifiable documents for each attribute name and an index value indicating a degree of variation of the plural types of attribute values for each attribute name, acquire an operation history of each user indicating the number of times the user performs the extracting operation for the attribute name of the document, from all storage area accessible by a user that is accessing the storage area, acquire an operation history of each storage area indicating the number of times the extracting operation is performed for the attribute name of the document, from each the storage area, and determine the priority of the items based on at least one of the acquired number of classifiable documents for each attribute name, the acquired index value for each attribute name, the acquired operation history of each user, and the acquired operation history of each storage area.

According to [1] and [7], it is possible to change a manner for extracting a document according to the documents stored in the storage area.

According to [2], it is possible to easily know, by the label name, the item that changes according to the attribute of the documents stored in the storage area.

According to [3], it is possible to prevent the document extracted from the storage area from being scattered in the main work area.

According to [4], it is possible to easily organize documents in the main work area as compared with a case where all the documents extracted from the storage area are directly arranged in the main work area.

According to [5], it is possible to know that the sub work area is arranged in the free area of the main work area.

According to [6], it is possible to specify and operate the storage area in the main work area.

According to [8], it is possible to easily organize documents in the work area as compared with a case where all the documents extracted from the storage area are directly arranged in the work area.

According to [9], it is possible to collectively extract the document classified for each item according to the attribute of the documents.

According to [10], it is possible to collectively extract, using the operator, the document classified for each item according to the attribute of the documents.

According to [11], it is possible to easily know, by the label name displayed in descending order of priority, the item corresponding to the attribute of the documents stored in the storage area.

According to [12], it is possible to determine the priority of the items in consideration of at least one of the number of classifiable documents for each attribute name and the index value indicating a degree of variation of the plural types of attribute values for each attribute name.

According to [13], it is possible to determine the priority of the items in consideration of the operation history of each user.

According to [14], it is possible to determine the priority of the items in consideration of the operation history of each user and the operation history of each storage area.

According to [15], it is possible to determine the priority of the items in consideration of at least one of the number of classifiable documents, the index value indicating a degree of variation of the plural types of attribute values, the operation history of each user, and the operation history of each storage area.

BRIEF DESCRIPTION OF DRAWINGS

Exemplary embodiment(s) of the present invention will be described in detail based on the following figures, wherein:

Fig. 1 is a block diagram showing an example of a configuration of a document management system according to a first exemplary embodiment;

Fig. 2 is a block diagram showing an example of a functional configuration of an information processing apparatus according to the first exemplary embodiment;

Fig. 3 shows an example of document attribute information according to the first exemplary embodiment;

Fig. 4A shows an example of an item determination matrix according to the exemplary embodiment;

Fig. 4B shows another example of the item determination matrix according to the exemplary embodiment;

Fig. 5 shows an example of a classification map according to the exemplary embodiment;

Figs. 6A, 6B, and 6C show display control processing of an item-specific extracting button according to the exemplary embodiment;

Fig. 7 is a front view showing an example of a main work area in which a sub work area according to the exemplary embodiment is displayed;

Fig. 8 is a front view showing another example of the sub work area according to the exemplary embodiment;

Fig. 9A is a front view showing another example of an item-specific extracting button according to the exemplary embodiment;

Fig. 9B is a front view showing still another example of the item-specific extracting button according to the exemplary embodiment;

Fig. 10 is a flowchart showing an example of a processing flow by an information processing program according to the first exemplary embodiment;

Fig. 11 is a front view showing an example of an item-specific extracting button according to the exemplary embodiment when a maximum number of items is two;

Fig. 12 is a front view showing an example of the item-specific extracting button according to the exemplary embodiment in which a label name is generated;

Fig. 13 shows a flow of a sales order task according to the exemplary embodiment;

Fig. 14 shows an example of the item-specific extracting button when applied to a sales order task according to the exemplary embodiment;

Fig. 15 shows another example of the item-specific extracting button when applied to a sales order task according to the exemplary embodiment;

Fig. 16 is a block diagram showing an example of a functional configuration of an information processing apparatus according to a second exemplary embodiment;

Fig. 17 shows an example of document attribute information according to the second exemplary embodiment;

Fig. 18 is a flowchart showing an example of a processing flow by an information processing program according to the second exemplary embodiment;

Fig. 19 shows a method for classifying documents in a main work area according to the exemplary embodiment;

Figs. 20A, 20B, and 20C show a method for obtaining a group of similar documents according to the exemplary embodiment;

Fig. 21 shows another method for obtaining a group of similar documents according to the exemplary embodiment;

Figs. 22A and 22B show a method for deriving a similar document area according to the exemplary embodiment;

Figs. 23A and 23B show a method for generating and arranging a sub work area according to the exemplary embodiment;

Fig. 24 shows a method for arranging the sub work area according to the exemplary embodiment;

Figs. 25A and 25B are front views of a main work area when applied to an approval task according to an example of the exemplary embodiment; and

Figs. 26A and 26B are front views of the main work area when applied to an approval task according to another example of the exemplary embodiment.


DETAILED DESCRIPTION

(First Exemplary Embodiment)

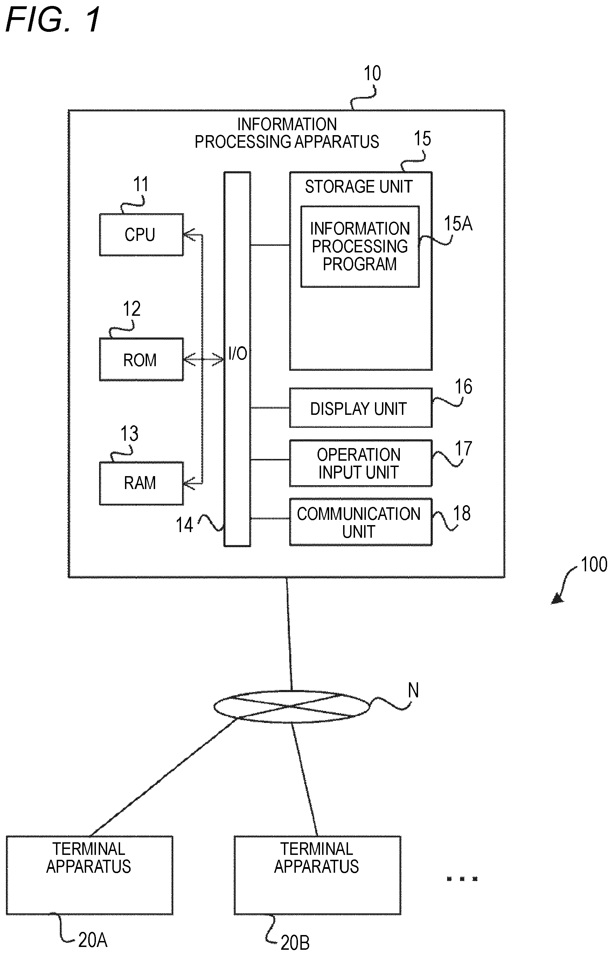

Fig. 1 is a block diagram showing an example of a configuration of a document management system 100 according to a first exemplary embodiment.

As shown in Fig. 1, the document management system 100 according to the present exemplary embodiment includes an information processing apparatus 10 and plural terminal apparatuses 20A, 20B ... and so on. The plural terminal apparatuses 20A, 20B, and so on have the same configuration and are collectively referred to as terminal apparatuses 20 when there is no need to particularly distinguish them from each other. The information processing device 10 and the terminal apparatuses 20 construct a so-called server-client system.

The information processing apparatus 10 according to the present exemplary embodiment includes a central processing unit (CPU) 11, a read only memory (ROM) 12, a random access memory (RAM) 13, an input and output interface (I/O) 14, a storage unit 15, a display unit 16, an operation input unit 17, and a communication unit 18.

The information processing apparatus 10 according to the present exemplary embodiment functions as a server, for example, a general-purpose computer apparatus such as a server computer or a personal computer (PC) is applied. As an example of the terminal apparatuses 20, a general-purpose computer apparatus such as a PC is applied.

The CPU 11, the ROM 12, the RAM 13, and the I/O 14 are connected to one another via a bus. Functional units including the storage unit 15, the display unit 16, the operation input unit 17, and the communication unit 18 are connected to the I/O 14. These functional units are communicable with the CPU 11 via the I/O 14.

The CPU 11, the ROM 12, the RAM 13, and the I/O 14 constitute a control unit. The control unit may be a sub-control unit that controls a part of the operation of the information processing apparatus 10, or may be a part of a main control unit that controls the entire operation of the information processing apparatus 10. A part or all of blocks of the control unit may be, for example, an integrated circuit such as large scale integration (LSI) or an integrated circuit (IC) chip set. An individual circuit may be used for each of the blocks, or a circuit in which some or all of the blocks are integrated may be used. Each of the blocks may be integrally provided, or a part of the blocks may be separately provided. A part of each of the blocks may be provided separately. The integration of the control unit is not limited to the LSI and a dedicated circuit or a general-purpose processor may be used.

As the storage unit 15, for example, a hard disk drive (HDD), a solid state drive (SSD), a flash memory, or the like is used. The storage unit 15 stores an information processing program 15A for implementing a document management function according to the present exemplary embodiment. The information processing program 15A may be stored in the ROM 12. For example, document management application software such as Docu Works (registered trademark) is applied to the information processing program 15A.

The information processing program 15A may be installed in advance in the information processing apparatus 10, for example. The information processing program 15A may be implemented by being stored in a non-volatile storage medium or distributed via a network and appropriately installed in the information processing apparatus 10. Examples of the non-volatile storage medium include a compact disc read only memory (CD-ROM), a magneto-optical disk, an HDD, a digital versatile disc read only memory (DVD-ROM), a flash memory, and a memory card.

The display unit 16 is, for example, a liquid crystal display (LCD) and an organic electro-luminescence (EL) display. The display unit 16 may integrally include a touch panel. The operation input unit 17 is provided with an operation input device such as a keyboard or a mouse. The display unit 16 and the operation input unit 17 receive various instructions from a user of the information processing apparatus 10. The display unit 16 displays various types of information such as a result of processing executed in response to an instruction received from the user and a notification to the processing.

The communication unit 18 is connected to, for example, a network N such as the Internet, a local area network (LAN), and a wide area network (WAN), and is communicatable with external devices such as the terminal apparatuses 20 and an image forming apparatus via the network N.

As described above, for example, a document may be transmitted and received via a tray that is present in the information processing apparatus 10 and functions as a storage area that may be shared by the plural terminal apparatuses 20. Each of the terminal apparatuses 20 displays a work area including the tray, and plural documents stored in the tray are extracted from the tray to the work area for work. In extracting a document, for example, a document associated with a sender (transmission source) of the document can be extracted from the tray. However, the method for extracting a document is fixed, and thus it may be difficult for the user to extract a desired document from the tray.

For this reason, the information processing apparatus 10 according to the present exemplary embodiment presents an operator in which an operation of extracting a document from the storage area is associated with plural documents stored in the storage area, and associates the operator with an operation of classifying and extracting a document from the storage area by an item that changes according to an attribute of each of the plural documents stored in the storage area. The storage area is, for example, a tray or a folder constituted by a part of an area of the storage unit 15, and is an area in which a document is stored. The storage area may be a shared area shared by plural users, or may be a personal area used by a specific user on an individual basis. Hereinafter, a case where a tray is applied as an example of the storage area will be described.

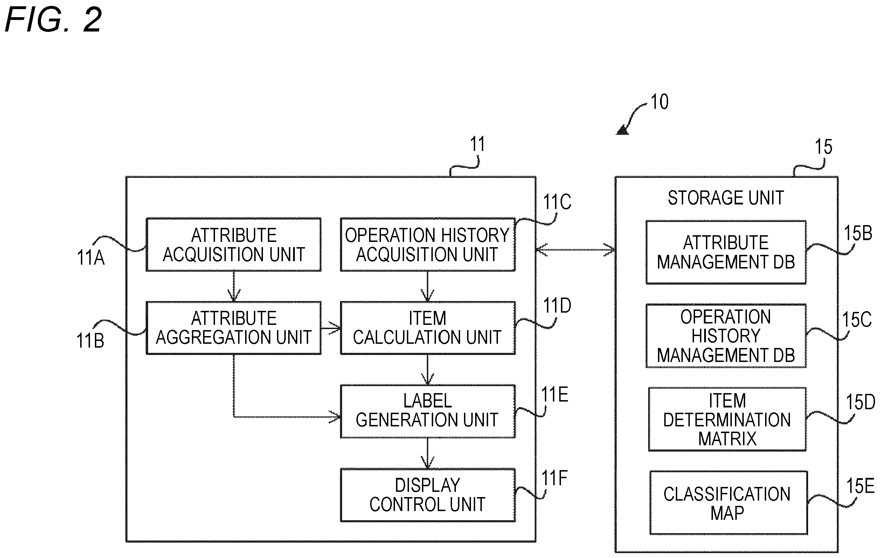

Specifically, the CPU 11 of the information processing apparatus 10 according to the present exemplary embodiment functions as units shown in Fig. 2 by writing the information processing program 15A stored in the storage unit 15 into the RAM 13 and executing the information processing program 15A. The CPU 11 is an example of a processor.

Fig. 2 is a block diagram showing an example of a functional configuration of the information processing apparatus 10 according to the first exemplary embodiment.

As shown in Fig. 2, the CPU 11 of the information processing apparatus 10 according to the present exemplary embodiment functions as an attribute acquisition unit 11A, an attribute aggregation unit 11B, an operation history acquisition unit 11C, an item calculation unit 11D, a label generation unit 11E, and a display control unit 11F.

The storage unit 15 according to the present exemplary embodiment stores an attribute management database (hereinafter referred to as "attribute management DB") 15B, an operation history management database (hereinafter referred to as "operation history management DB") 15C, an item determination matrix 15D, and a classification map 15E.

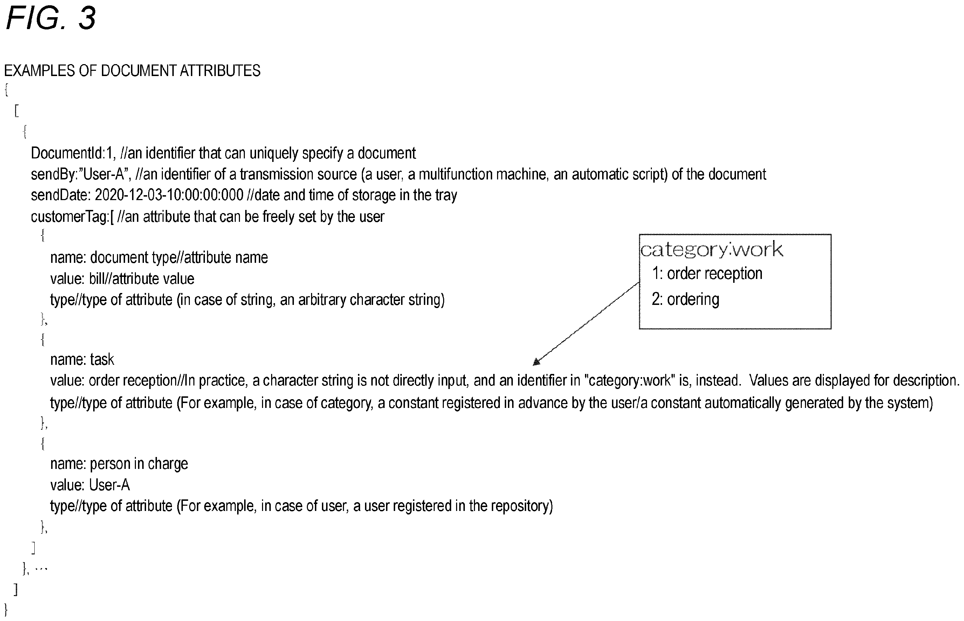

The attribute management DB 15B is a database that manages attributes of documents for each tray. Each of the documents is associated with an attribute in advance. Fig. 3 shows an example of document attribute information managed by the attribute management DB 15B.

Fig. 3 shows an example of document attribute information according to the first exemplary embodiment.

As shown in Fig. 3, an attribute of a document includes an attribute name, plural types of attribute values, and the like. The attribute of the document include "document identification (Id)", "sendBy", "sendDate", and "customerTag". "documentId" indicates an identifier that uniquely specifies a document and "sendBy" indicates an identifier that identifies a transmission source (a user, a multifunction machine, an automatic script, or the like) of the document. "sendDate" indicates a date and time of storage in the tray and "customerTag" indicates an attribute that may be arbitrarily set by the user.

As the attribute of a document, "name" indicates an attribute name (for example, a document type), "value" indicates an attribute value (for example, a bill), and "type" indicates a type of attribute (for example, string: an arbitrary character string).

In addition, as the attribute of a document, "name" indicates an attribute name (for example, task), "value" indicates an attribute value (for example, order reception), and "type" indicates a type of attribute (for example, category:work). In practice, a character string is not directly input to the attribute value and an identifier in "category:work" (for example, 1: order reception, 2: ordering) is input to the attribute value instead. Here, character strings are shown for convenience of description. When the type of attribute is "category:work", it indicates a constant registered in advance by the user or a constant automatically generated by the system.

In addition, as the attribute of a document, "name" indicates an attribute name (for example, a person in charge), "value" indicates an attribute value (for example, User-A), and "type" indicates a type of attribute (for example, user). When the type of attribute is "user", it indicates a user registered in the repository.

The operation history management DB 15C is a database that manages an operation history of each user and an operation history of each tray. The operation history of each user is represented as the number of times the user performs an operation of extracting a document for each attribute name of document for all trays accessible by the user. The operation history of each tray is represented as the number of times a document is extracted for each attribute name of document for the tray.

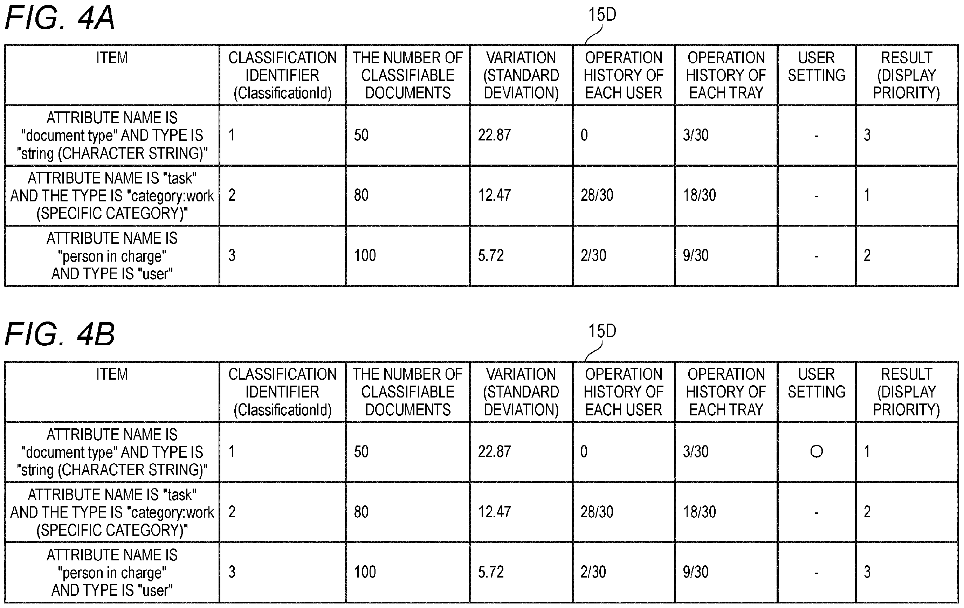

For example, as shown in Figs. 4A and 4B, the item determination matrix 15D stores values (data) acquired by the attribute acquisition unit 11A and the operation history acquisition unit 11C. The item determination matrix 15D is used to determine an item that classifies plural documents in a tray on an attribute basis. The item referred to here is, for example, represented as a set of an attribute name and a type of attribute (hereinafter, the type of attribute is simply referred to as "type").

Fig. 4A shows an example of the item determination matrix 15D according to the exemplary embodiment. Fig. 4B shows another example of the item determination matrix 15D according to the exemplary embodiment.

As shown in Figs. 4A and 4B, the item determination matrix 15D includes, for each item, for example, a classification identifier (classificationId), the number of classifiable documents, an index value (for example, standard deviation) indicating the degree of variation of plural types of attribute values, an operation history of each user, an operation history of each tray, user setting, and a result (display priority). The item determination matrix 15D shown in Fig. 4A is different from the item determination matrix 15D shown in Fig. 4B in that the user setting is invalid for all items. In the item determination matrix 15D shown in Fig. 4B, the user setting is valid for one item (the valid item is indicated by a circle).

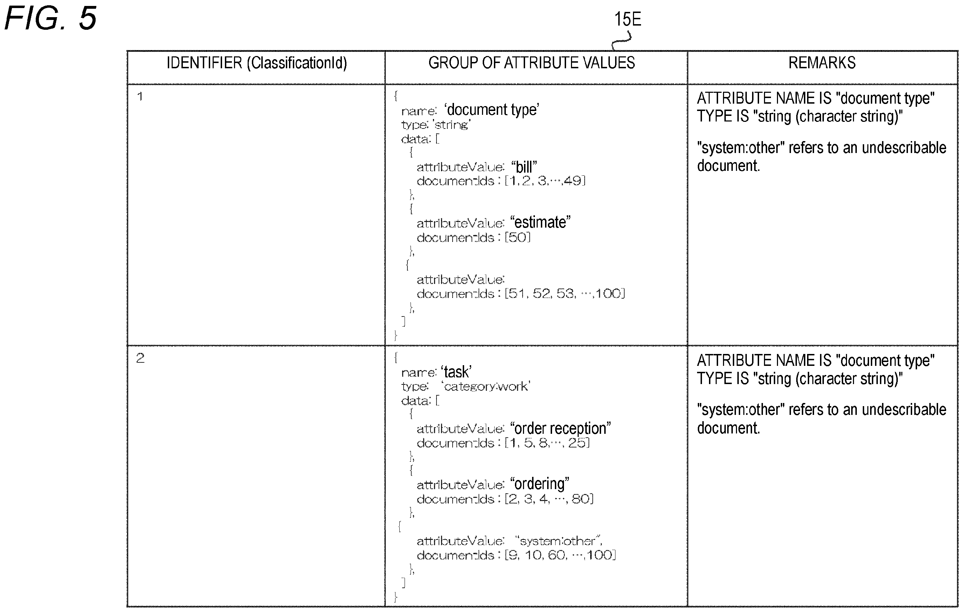

The classification identifier is associated with a set (that is, an item) of an attribute name and a type, and represents, for example, an identifier obtained from the classification map 15E shown in Fig. 5 to be described later. The number of classifiable documents is the number of documents other than a document having a "type" of "system:other" indicating an undescribable document among total documents of each attribute name. The user setting indicates that an item is set (for example, registered in favorites) in advance as an item (classification) that the user always wants to use. The result (display priority) indicates the display priority determined based on the data stored in the item determination matrix 15D. A method for determining the display priority will be described later.

Fig. 5 shows an example of the classification map 15E according to the exemplary embodiment.

As shown in Fig. 5, in the classification map 15E, an identifier (classificationId) and a group of attribute values are registered in association with each other. Remarks are described for convenience of description. The classification map 15E is used when documents in a tray are classified into plural items according to attributes. For example, if the attribute name is "document type" and the type is "string (character string)", a document is classified into an item of an identifier "1", and if the attribute name is "task" and the type is "category: work (specific category)", a document is classified into an item of an identifier "2". In the example of Fig. 5, in the classification in which the attribute name is "document type" and the type is "string (character string)", the attribute value of "bill" is 49, the attribute value of "estimate" is 1, and the attribute value of "system: other" is 50. As described above, "system: other" indicates an undescribable document. In the classification in which the attribute name is "task" and the type is "category: work (specific category)", the attribute value of "order reception" is 30, the attribute value of "order placement" is 50, and the attribute value of "system: other" is 20.

Referring back to Fig. 2, the attribute acquisition unit 11A acquires attributes of documents in the tray from the attribute management DB 15B. The attribute acquisition unit 11A narrows down the tray using information on a storage destination (for example, a specific shared tray) of the documents to acquire the attributes of the documents. The attributes to be acquired include an attribute registered in advance in each document by the user, an attribute (for example, an identifier) automatically registered by the system, and the like.

The attribute aggregation unit 11B refers to the classification map 15E based on the attributes of the documents acquired by the attribute acquisition unit 11A, and classifies the documents in the tray by an item. The attribute aggregation unit 11B aggregates the attributes of the documents on an item basis, and registers the number of classifiable documents and the index value (standard deviation) indicating the degree of variation of plural types of attribute values in the item determination matrix 15D. At this time, the attribute aggregation unit 11B registers "documentIds", which is a document Id, in the classification map 15E for each of the plural types of attribute values.

The operation history acquisition unit 11C acquires, from the operation history management DB 15C, the operation history of each user for each attribute name of document for all trays accessible by the user who accesses the tray. The operation history acquisition unit 11C acquires, from the operation history management DB 15C, the operation history of each tray for each attribute name of document for the trays. The operation history acquisition unit 11C registers the acquired operation history of each user and the acquired operation history of each tray in the item determination matrix 15D. The operation history acquisition unit 11C narrows down and acquires the operation history using, for example, information such as "a user who is accessing a tray" and "an identifier of a tray".

The item calculation unit 11D calculates item evaluation values based on the values (data) registered in the item determination matrix 15D, and determines the display priority in descending order of the item evaluation values, for example. A specific method for calculating the item evaluation values will be described later. The item calculation unit 11D registers the determined display priority in the item determination matrix 15D.

When the number of classification items classified by the classification map 15E is larger than a maximum number of items allocated to the operator, the item calculation unit 11D may acquire the number of classifiable documents and an index value (standard deviation) indicating the degree of variation of plural types of attribute values from the item determination matrix 15D, calculate an item evaluation value using at least one of the acquired number of classifiable documents and the acquired index value (standard deviation) indicating the degree of variation of plural types of attribute values, and determine the item priority. For example, an item having a higher percentage of the number of classifiable documents is given a higher priority. An item having a smaller variation (that is, an item having a larger reciprocal of the index value (standard deviation)) is given a higher priority.

When the number of classification items classified by the classification map 15E is larger than the maximum number of items allocated to the operator, the item calculation unit 11D may acquire the operation history of each user from the item determination matrix 15D, calculate an item evaluation value using the acquired operation history of each user, and determine the priority of the items. For example, an item having a higher ratio of the number of operations of each user is given a higher priority.

When the number of classification items classified by the classification map 15E is larger than the maximum number of items allocated to the operator, the item calculation unit 11D may acquire the operation history of each user and the operation history of each tray from the item determination matrix 15D, calculate an item evaluation value using the acquired operation history of each user and the acquired operation history of each tray, and determine the priority of the items. For example, an item having a higher ratio of the number of operations of each user and a higher ratio of the number of operations of each tray is given a higher priority.

When the number of classification items classified by the classification map 15E is larger than the maximum number of items allocated to the operator, the item calculation unit 11D may acquire the number of classifiable documents, the index value (standard deviation) indicating the degree of variation of plural types of attribute values, the operation history of each user, and the operation history of each tray from the item determination matrix 15D, calculate an item evaluation value using at least one of the acquired number of classifiable documents, the acquired index value (standard deviation) indicating the degree of variation of plural types of attribute values, the operation history of each user, and the operation history of each tray, and determine the item priority. For example, when at least one of an item having a higher percentage of the number of classifiable documents, an item having a smaller variation, an item having a higher percentage of the number of operations of each user, and an item having a higher percentage of the number of operations of each tray is present, the item is given a higher priority.

When the number of classification items classified by the classification map 15E is larger than the maximum number of items allocated to the operator, the label generating unit 11E generates label names indicating the classification items in descending order of priority of the display registered in the item determination matrix 15D, and associates the generated label names with an operation of classifying and extracting documents from the tray. The label name is generated based on, for example, the attribute name. When the number of classification items classified by the classification map 15E is equal to or less than the maximum number of items allocated to the operator, the label generating unit 11E generates label names indicating the classification items with the classification items as display targets, and associates the generated label names with the operation of classifying and extracting documents from the tray.

The display control unit 11F performs control to display on the terminal apparatuses 20 an item-specific extracting button in which the label names generated by the label generating unit 11E are arranged. The item-specific extracting button is an example of the operator. The operator is not limited to the button display and may be displayed in a list, for example.

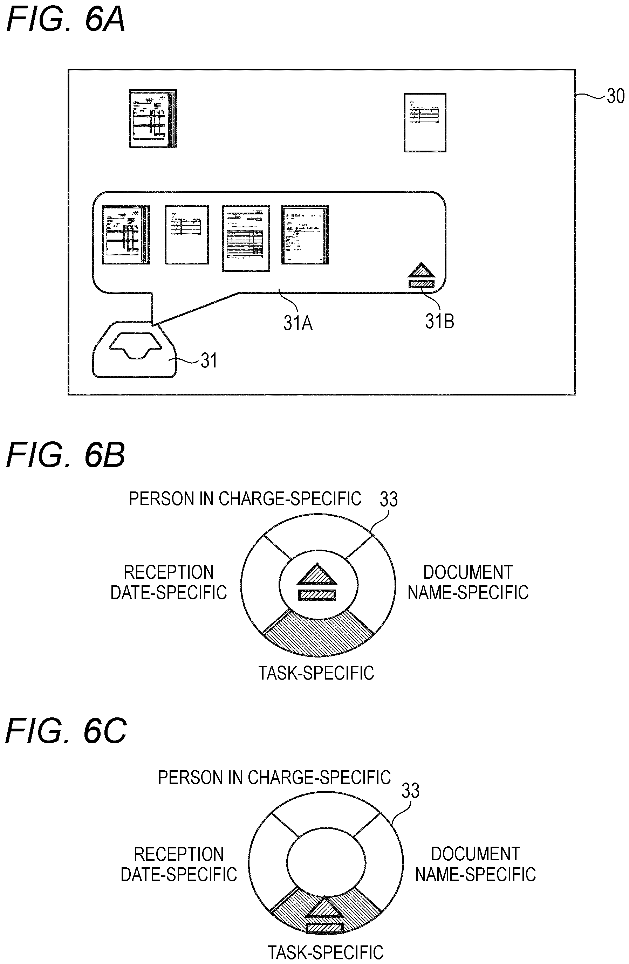

Figs. 6A, 6B, and 6C show display control processing of an item-specific extracting button according to the present exemplary embodiment.

In Fig. 6A, the display control unit 11F performs control to display a main work area 30 in which multiple documents are arranged on the terminal apparatus 20. The main work area 30 is an area in which work is performed on the arranged documents. In the main work area 30, a tray 31 is displayed as an icon image. When a mouse is placed over the tray 31, a thumbnail image 31A of documents stored in the tray 31 is displayed, and an extracting-all button 31B for extracting all the documents in the tray 31 to the main work area 30 is displayed.

Fig. 6B shows a step subsequent to that shown in Fig. 6A. In Fig. 6B, in response to the mouse-over operation on the extracting-all button 31B, the display control unit 11F performs control to change the display of the extracting-all button 31B and display an item-specific extracting button 33 in the main work area 30. The item-specific extracting button 33 is associated with an operation of extracting plural documents stored in the tray 31 from the tray 31. The item-specific extracting button 33 is associated with an operation of classifying and extracting documents from the tray 31 by an item that changes according to the attribute of each of the plural documents stored in the tray 31. For example, in the item-specific extracting button 33, "person in charge-specific", "reception date-specific", "task-specific", and "document name-specific" are arranged as label names indicating items. A selection state is switched by mouse-over operation. In this example, "task-specific" is selected.

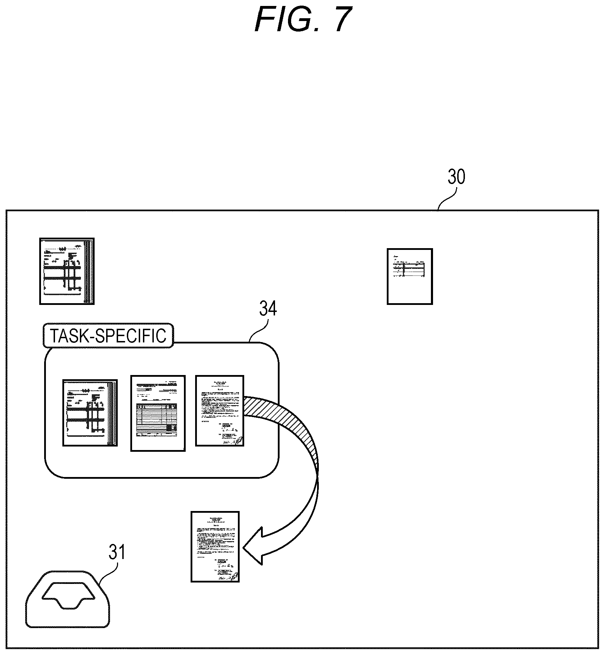

Fig. 6C shows a step subsequent to that shown in Fig. 6B. In Fig. 6C, in response to a click operation being performed when "task-specific" is selected, the display control unit 11F performs control to extract documents classified "task-specific" from the tray 31 and display the documents in the main work area 30. For example, as shown in Fig. 7, a sub work area including documents classified by task may be displayed.

Fig. 7 is a front view showing an example of the main work area 30 in which a sub work area 34 according to the present exemplary embodiment is displayed.

# EP 4 060 518 A1

When the item-specific extracting button 33 shown in Figs. 6A to 6C described above is operated, the display control unit 11F performs control to display the sub work area 34 including item-specific (for example, task-specific) documents extracted by the operation of the item-specific extracting button 33 in the main work area 30 as shown in Fig. 7. The sub work area 34 is an area smaller than the main working area 30. The documents extracted from the tray 31 to the sub work area 34 are deleted from the tray 31 (that is, the documents are moved from the tray 31 to the sub work area 34). The sub work area 34 has a title (for example, a label name) and is variable in size. The documents included in the sub work area 34 may be taken in and out from the main work area 30. In addition, the display of documents originally arranged in the main work area 30 does not change.

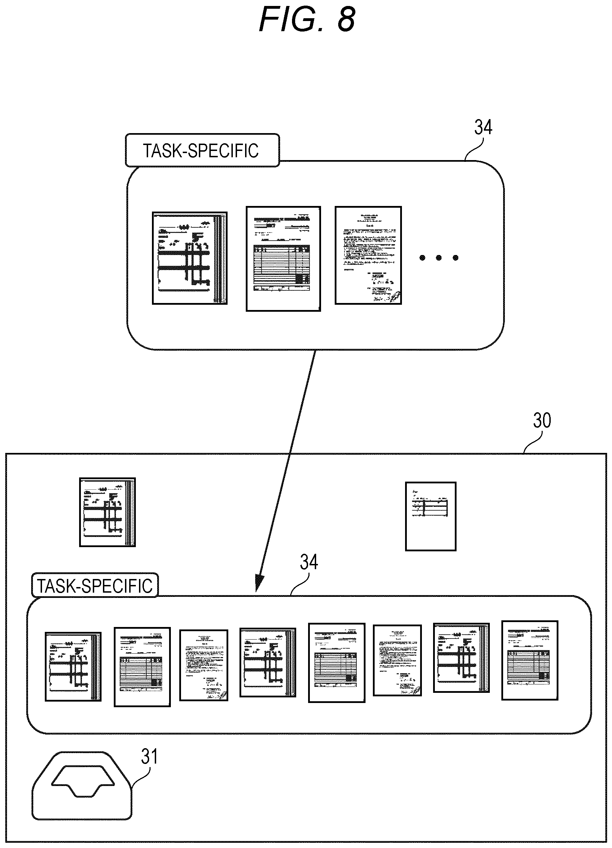

Fig. 8 is a front view showing another example of the sub work area 34 according to the present exemplary embodiment.

When the number of thumbnail images displayed in the sub work area 34 is large, as shown in Fig. 8 (upper view), only multiple representative thumbnail images may be displayed, and the remaining thumbnail images may be displayed as omission symbols "...". As a result, the sub work area 34 is saved in space. In this case, the size of the sub work area 34 is increased and all the documents in the selected sub work area 34 are displayed only when the sub work area 34 is in a selected state, as shown in Fig. 8 (lower view). As a result, it is possible to perform an operation on all the documents in the selected sub work area 34. A specific method for arranging the sub work area 34 will be described later.

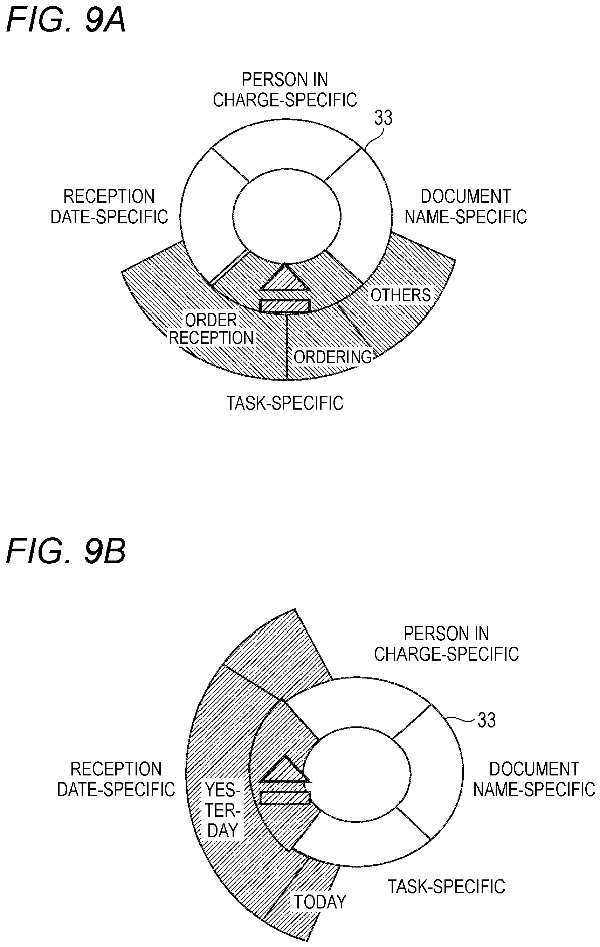

Fig. 9A is a front view showing another example of the item-specific extracting button 33 according to the present exemplary embodiment. Fig. 9B is a front view showing still another example of the item-specific extracting button 33 according to the present exemplary embodiment.

The item-specific extracting button 33 shown in Fig. 9A is an example when documents are limited and extracted by the attribute value. That is, it is assumed that items "task-specific" include "order reception", "ordering", and "others" as attribute values, and the proportion of documents decreases in this order. The display area of "task-specific" in the item-specific extracting button 33 is changed according to the proportion of documents of "order reception", "ordering", and "other". As a result, it is possible to limit and extract documents by the attribute value.

The item-specific extracting button 33 shown in Fig. 9B is an example when documents are limited and extracted by the attribute value (date and time). That is, it is assumed that items "reception date-specific" include "yesterday" and "today" as attribute values (date and time), and the proportion of documents decreases in this order. The display area of "reception date-specific" in the item-specific extracting button 33 is changed according to the proportion of the documents of "yesterday" and "today". As a result, it is possible to limit and extract documents by a desired attribute value (date and time).

The display control unit 11F according to the present exemplary embodiment performs control to change the label name of the item-specific extracting button 33 in accordance with a change in the classification item. When the number of classification items is larger than the maximum number of items allocated to the item-specific extracting button 33, for example, the display control unit 11F refers to the item determination matrix 15D shown in Fig. 4A or 4B described above, and performs control to display, on the item-specific extracting button 33, label names indicating items selected from the classification items in descending order of priority.

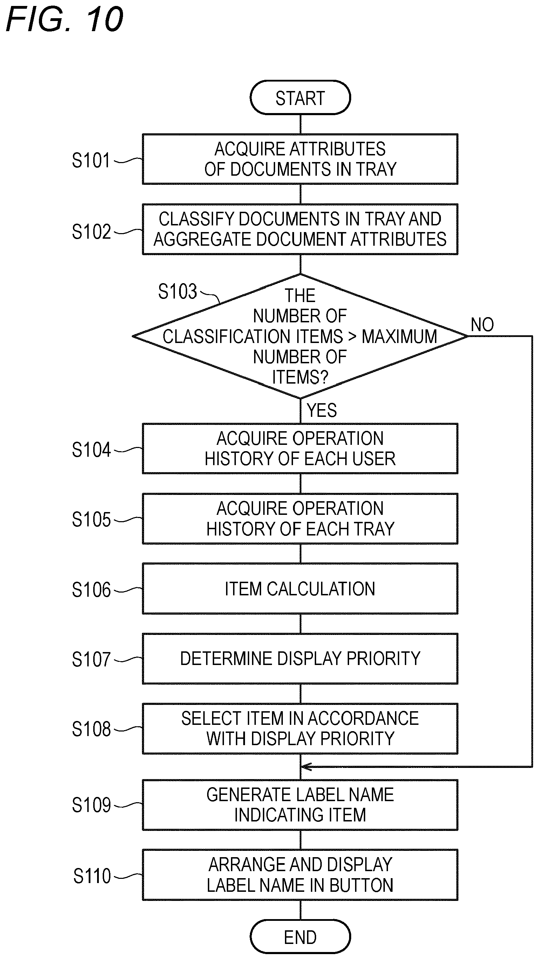

Next, the operation of the information processing apparatus 10 according to the first exemplary embodiment will be described with reference to Fig. 10.

Fig. 10 is a flowchart showing an example of a processing flow by the information processing program 15A according to the first exemplary embodiment.

First, when the information processing apparatus 10 is instructed to execute the item-specific document extracting processing, the information processing program 15A is activated by the CPU 11, and the following steps are executed.

In step S101 of Fig. 10, for example, the CPU 11 acquires attributes of documents in a tray by using the document attribute information shown in Fig. 3 described above. Specifically, a document list of the tray is acquired, and the attributes of the documents are acquired from the document attribute information on the documents included in the document list. The processing is executed to display thumbnail images of the documents stored in the tray. At this time, a total number of documents in the tray is acquired.

In step S102, the CPU 11 refers to the classification map 15E shown in Fig. 5, for example, based on the attributes of the documents acquired in step S101, and classifies the documents in the tray by an item. Further, the CPU 11 aggregates the document attributes in the tray. Specifically, the number of documents is obtained for each set (that is, item) of attribute name and type. For example, the total number of documents stored in the tray is 100. Among this, there are 50 documents whose attribute name is "document type" and whose type is "string (character string)", 80 documents whose attribute name is "task" and whose type is "category:work (specific category)", and 100 documents whose attribute name is "person in charge" and whose type is "user".

In addition, the proportion of attribute value is obtained for each set of attribute name and type. As for the proportion of attribute value, for example, in a case of a set of an attribute name of "document type" and a type of "string (character string)", there are 49 documents having an attribute value of "bill" and one document having an attribute value of "estimate". In addition, for example, in a case of a set of an attribute name of "task" and a type of "category:work (specific category)", there are 30 documents having an attribute value of "order reception" and 50 documents having an attribute value of "ordering". At this time, the CPU 11 registers the document Id (= documentIds) for each attribute value in the classification map 15E shown in Fig. 5 as an example. The CPU 11 registers, for example, the number of classifiable documents and an index value (standard deviation) indicating the degree of variation obtained from the aggregation result in the item determination matrix 15D shown in Fig. 4A or 4B described above.

In step S103, the CPU 11 determines whether the number of classification items classified by the classification map 15E is larger than the maximum number of items allocated to the item-specific extracting button 33. When it is determined that the number of classification items is larger than the maximum number of items (in a case of a positive determination), the processing proceeds to step S104, and when it is determined that the number of classification items is equal to or smaller than the maximum number of items (in a case of a negative determination), the processing proceeds to step S109.

In step S104, for example, the CPU 11 uses the operation history management DB 15C to acquire the operation history of each user indicating the number of times the user performs the operation of extracting documents for each attribute name of document for all trays accessible by the user accessing a tray. That is, the number of times the user who is accessing a tray performs the operation of classifying and extracting documents is acquired. For example, the acquired total number of times of performing the operation of classifying and extracting documents from a tray is 30. The number of times of operation is not particularly limited, and it is desirable to acquire the number of times of operation within a most recent predetermined period (for example, one to three months). The operation is limited to the operation of the user during access. The number of times of operation is acquired for all trays to which the user has an access right. The number of times of operation of the user who is accessing is obtained for each set of attribute name and type. For example, when the attribute name is "document type" and the type is "string (character string)", the number of times is 0, when the attribute name is "task" and the type is "category:work (specific category)", the number of times is 28, and when the attribute name is "person in charge" and the type is "user", the number of times is 2. The CPU 11 registers the proportion (for example, 0/30, 28/30, 2/30) of the extracting operation of the user during access in the item determination matrix 15D shown in Fig. 4A or 4B as the operation history of each user.

In step S105, for example, the CPU 11 uses the operation history management DB 15C to acquire the operation history of each tray indicating the number of times the operation of extracting documents is performed for each attribute name of document with respect to the tray. That is, the number of times of performing the operation of classifying and extracting documents in the tray is acquired. For example, the acquired total number of times of performing the operation of classifying and extracting documents from the tray is 30. The number of times of operation is not particularly limited, and it is desirable to acquire the number of times of operation within a most recent predetermined period (for example, one to three months). The tray is limited to a tray that is currently being operated and the user is not particularly specified. The processing is skipped in a case of a personal tray (for example, a post-office box tray). The number of times of operation is obtained for each set of attribute name and type. For example, when the attribute name is "document type" and the type is "string (character string)", the number of times is 3, when the attribute name is "task" and the type is "category:work (specific category)", the number of times is 18, and when the attribute name is "person in charge" and the type is "user", the number of times is 9. The CPU 11 registers the proportion (for example, 3/30, 18/30, or 9/30) of the extracting operation of the tray currently being operated as the operation history of each tray in the item determination matrix 15D shown in Fig. 4A or 4B described above.

In step S106, for example, the CPU 11 performs item calculation using the item determination matrix 15D shown in Fig. 4A or 4B described above. That is, the above-described item evaluation value is calculated. For example, when the proportion of classifiable documents is A, the reciprocal (that is, the reciprocal represents the smallness of variation) of an index value (standard deviation) indicating the degree of variation is B, the proportion of the extracting operation of each user is C, the proportion of the extracting operation of each tray is D, weights determined by the system are w1 to w4, and the constant of the user setting (favorites) is w5, the item evaluation value V is expressed by the following equation (1).

$$V = A \times w1 + B \times w2 + C \times w3 + D \times w4 + w5 \; ... \; (1)$$

In the above equation, $w1 \geq w2 \geq w3 \geq w4$, w5 (favorites) = 0, or w5 > > w1.

In order to determine an optimum weight, for example, a logic such as machine learning may be added. The constant w5 is an external factor and is appropriately set by the user. A relatively large value may be set to the constant w5 such that the user may easily select an item particularly desired for the user to use.

Specifically, an example of calculating the item evaluation value using the item determination matrix 15D shown in Fig. 4A described above will be described. In the example of Fig. 4A, for the item (identifier (ClassificationId) = 1) whose attribute name is "document type" and whose type is "string (character string)", it is assumed that, among a total number of 100 documents, there are 49 documents whose attribute value is "bill", one document whose attribute value is "estimate", and 50 undescribable documents. For the item (identifier = 2) whose attribute name is "task" and whose type is "category:work (specific category)", it is assumed that, among a total number of 100 documents, there are 30 documents whose attribute value is "order reception", 50 documents whose attribute value is "ordering", and 20 undescribable documents. For the item (identifier = 3) whose attribute name is "person in charge" and whose type is "user", it is assumed that, among a total number of 100 documents, there are 50 documents whose attribute value is "User-A" and 50 documents whose attribute value is "User-B".

In the item of identifier = 1, when the weight $w1 = w2 = w3 = w4 = 1$ and the constant $w5 = 0$, an item evaluation value V1 is obtained as follows.

$$V1 = 50/100 + 1/22.87 + 0/30 + 3/30 \approx 0.64$$

In the item of identifier = 2, when the weight $w1 = w2 = w3 = w4 = 1$ and the constant $w5 = 0$, an item evaluation value V2 is obtained as follows.

$$V2 = 80/100 + 1/12.47 + 28/30 + 18/30 \approx 2.41$$

In the item of identifier = 3, when the weight $w1 = w2 = w3 = w4 = 1$ and the constant $w5 = 0$, an item evaluation value V3 is obtained as follows.

$$V3 = 100/100 + 1/5.72 + 2/30 + 9/30 \approx 1.54$$

In addition, an example of calculating item evaluation values using the item determination matrix 15D shown in Fig. 4B described above will be described. In the example of Fig. 4B, the user setting is valid for the item of identifier = 1, that is, the user setting is registered in favorites.

In the item of identifier = 1, when the weight $w1 = w2 = w3 = w4 = 1$ and the constant $w5 = 3$, the item evaluation value V1 is obtained as follows.

$$V1 = 50/100 + 1/22.87 + 0/30 + 3/30 + 3 \approx 3.64$$

In the item of identifier = 2, when the weight $w1 = w2 = w3 = w4 = 1$ and the constant $w5 = 0$, the item evaluation value V2 is obtained as follows.

$$V2 = 80/100 + 1/12.47 + 28/30 + 18/30 \approx 2.41$$

In the item of identifier = 3, when the weight $w1 = w2 = w3 = w4 = 1$ and the constant $w5 = 0$, the item evaluation value V3 is obtained as follows.

$$V3 = 100/100 + 1/5.72 + 2/30 + 9/30 \approx 1.54$$

In step S107, the CPU 11 determines the display priority based on the item evaluation value calculated in step S106, and registers the determined display priority in the item determination matrix 15D shown in Fig. 4A or 4B as an example. Specifically, in the item determination matrix 15D shown in Fig. 4A described above, the display priority is determined in an order of the item of identifier = 2, the item of identifier = 3, and the item of identifier = 1 in descending order of the item evaluation value. For example, when comparing the item of identifier = 1 and the item of identifier = 2, the number of classifiable documents is larger in the item of identifier = 2, the variation of the attribute value is smaller in the item of identifier = 2, and the operation history of each user (the number of times of extraction) is larger in the item of identifier = 2. From these, it may be said that the item of identifier = 2 is a better classifying.

In the item determination matrix 15D shown in Fig. 4B, the display priority is determined in an order of the item of identifier = 1, the item of identifier = 2, and the item of identifier = 3 in descending order of the item evaluation value. The item of identifier = 1 has a high display priority since the user setting is valid, that is, the favorite is registered.

In the above description, the item priority is determined using all of the proportion A of classifiable documents, the reciprocal B of the index value (standard deviation) indicating the degree of variation, the proportion C of the extracting operation of each user, and the proportion D of the extracting operation of each tray. The method for determining the item priority is not limited thereto. For example, the item priority may be determined using at least one of the proportion A of classifiable documents and the reciprocal B of the index value (standard deviation) indicating the degree of variation, or be determined using the proportion C of the extracting operation of each user. When sufficient accuracy is not obtained only by the proportion C of the extracting operation of each user, the item priority may be determined using the proportion C of the extracting operation of each user and the proportion D of the extracting operation of each tray. Further, the item priority may be determined using at least one of the proportion A of classifiable documents, the reciprocal B of the index value (standard deviation) indicating the degree of variation, the proportion C of the extracting operation of each user, and the proportion D of the extracting operation of each tray.

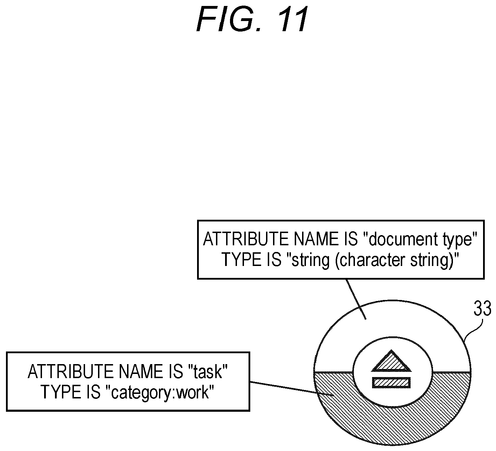

In step S108, for example, the CPU 11 selects an item in accordance with the display priority registered in the item determination matrix 15D shown in Fig. 4A or 4B described above. That is, the items are selected in descending order of the item evaluation value obtained by the calculation of the item in step S106. The classification item is selected according to a maximum number of displayable items of the item-specific extracting button 33. The maximum number of items of the item-specific extracting button 33 is, for example, two or more and four or less. For example, when the maximum number of items of the item-specific extracting button 33 is two, the button items shown in Fig. 11 are obtained.

Fig. 11 is a front view showing an example of the item-specific extracting button 33 according to the present exemplary embodiment in a case where the maximum number of items is two.

As shown in Fig. 11, the item-specific extracting button 33 displays two items: an item whose attribute name is "document type" and whose type is "string (character string)", and an item whose attribute name is "task" and whose type is "category: work (specific category)".

In a case where the item evaluation values of the calculation results are the same, for example, (1) an item having a user extracting operation history and the date and time of which is new is selected. (2) In a case where it is not determined by the determination of above (1), a similar calculation further adjusted by adding tray extracting operation history is performed. (3) In a case where it is not determined by the determination of above (2), the system determines an item at random.

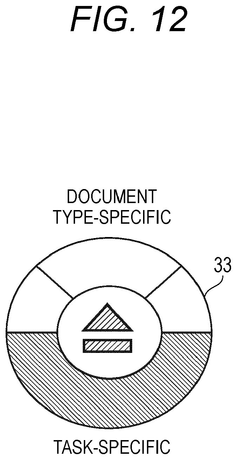

In step S109, the CPU 11 generates a label name indicating the item. When the number of classification items is equal to or smaller than the maximum number of items, the label names of the classified items are generated, and when the number of classification items is larger than the maximum number of items, the label names are generated in descending order of display priority. The label name is generated based on, for example, the attribute name. For example, as shown in Fig. 12, in a case of an item whose attribute name is "document type" and whose type is "string (character string)", the label name is generated as "document type-specific", and in a case of an item whose attribute name is "task" and whose type is "category: work (specific category)", the label name is generated as "task-specific". At this time, the label name and the identifier (classificationId) of the classification map 15E are associated with each other.

Fig. 12 is a front view showing an example of the item-specific extracting button 33 according to the present exemplary embodiment in which the label name is generated.

In the item-specific extraction button 33 shown in Fig. 12, a label name "document type-specific" is generated corresponding to an item whose attribute name is "document type" and whose type is "string (character string)", and a label name "task-specific" is generated corresponding to an item whose attribute name is "task" and whose type is "category: work (specific category)".

In step S110, the CPU 11 arranges the label name generated in step S109 in the item-specific extracting button 33, performs control to display the item-specific extracting button 33 in the main work area 30, and ends the series of processing by the information processing program 15A.

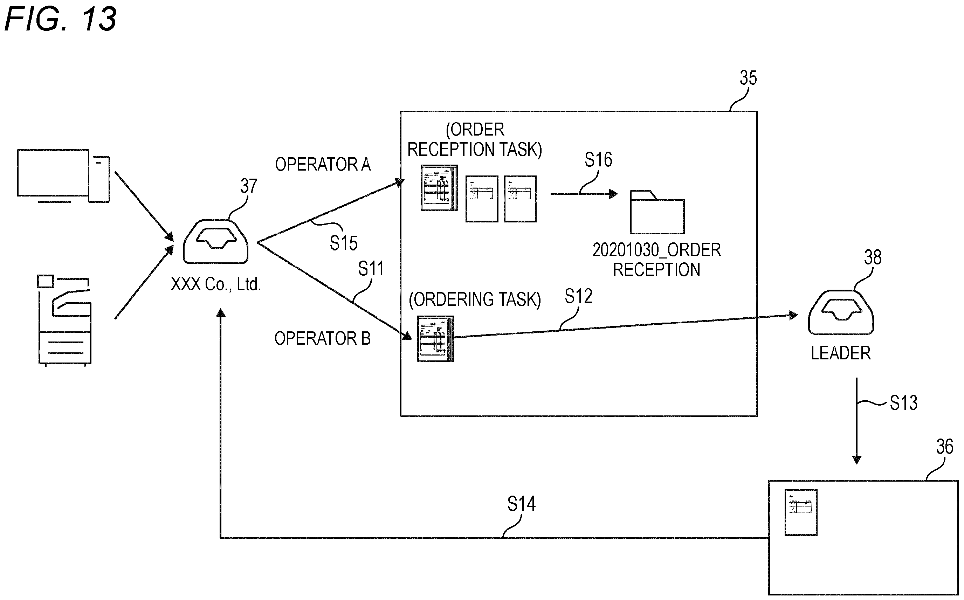

Next, with reference to Figs. 13 to 15, a case where the document management system according to the present exemplary embodiment is applied to a sales order task will be specifically described.

Fig. 13 shows a flow of the sales order task according to the present exemplary embodiment.

In the example shown in Fig. 13, a shared tray 37 is provided for each customer and each of an operator A and an operator B may operate the shared tray 37. The operator A and the operator B may perform work at the same time. Leaders of the operator A and the operator B may see the status of documents in the shared tray 37.

In S11 in Fig. 13, the operator B extracts a document related to an ordering task from the shared tray 37 and puts it in a sales order sharing work area 35 of the terminal apparatus 20.

In S12, the operator B stores the document in a personal tray 38 of a terminal apparatus used by the leader to request approval of the document put in the sales order sharing work area 35.

In S13, the leader extracts a document for approval from the personal tray 38 and puts it in a personal work area 36.

In S14, an approval seal is applied by the leader to the document put in the personal work area 36, and the approved document applied with the approval seal is stored in the shared tray 37.

On the other hand, in S15, the operator A extracts a document related to an order reception task from the shared tray 37 and puts it in the sales order sharing operation area 35 of the terminal apparatus 20.

In S16, among documents extracted in the sales order sharing work area 35, the operator A stores the approved document in a folder for each date and task.

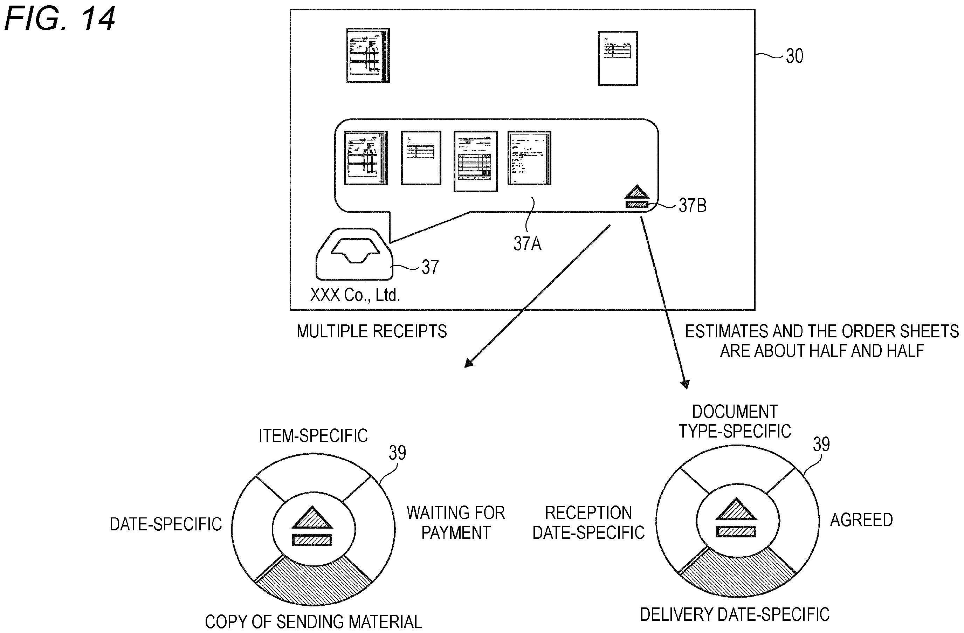

Fig. 14 shows an example of an item-specific extracting button 39 according to the present exemplary embodiment when applied to a sales order task.

As shown in Fig. 14, the main work area 30 in which some documents are arranged is displayed on the terminal apparatus 20. In the main work area 30, the shared tray 37 is displayed as an icon image. In response to the mouse-over operation on the shared tray 37, a thumbnail image 37A of documents stored in the shared tray 37 is displayed, and an extracting-all button 37B for extracting all the documents in the shared tray 37 to the main work area 30 is displayed.

Then, in response to the mouse-over operation on the extracting-all button 37B, the display of the extracting-all button 37B is changed, and the item-specific extracting button 39 is displayed in the main work area 30. The item-specific extracting button 39 is associated with an operation of extracting plural documents stored in the shared tray 37 from the shared tray 37. The item-specific extracting button 39 is associated with an operation of classifying and extracting documents from the shared tray 37 by an item that changes according to the attribute of each of the plural documents stored in the shared tray 37. In the example of Fig. 14, when there are multiple receipts in the shared tray 37, "item-specific", "date-specific", " copy of sending material", and "waiting for payment" are arranged as label names indicating items in the item-specific extracting button 39. When estimates and the order sheets are about half and half in the shared tray 37, "document type-specific", "reception date-specific", "delivery date-specific", and "agreed" are arranged in the item-specific extracting button 39 as label names indicating items.

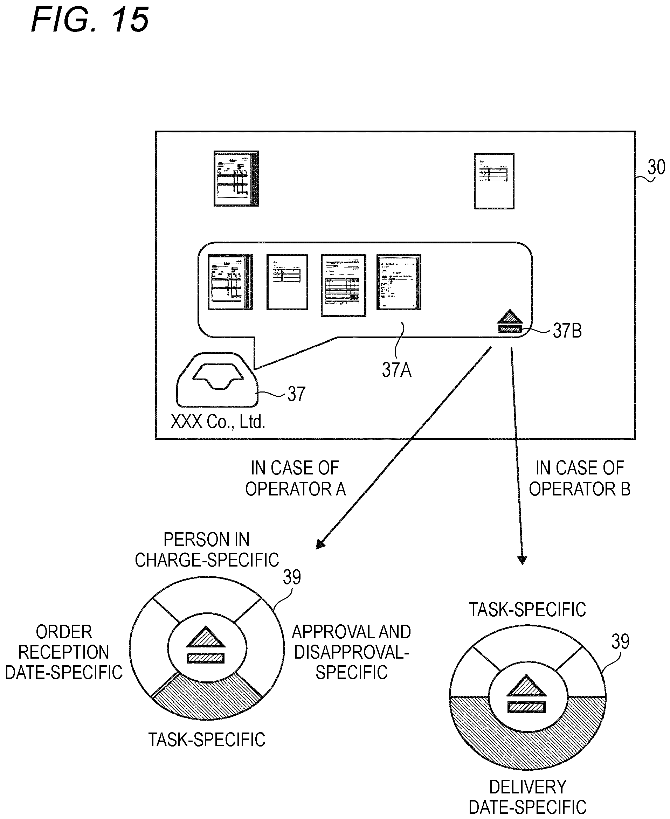

Fig. 15 shows another example of the item-specific extracting button 39 according to the present exemplary embodiment when applied to a sales order task.

In the example of Fig. 15, when the operator A operates the shared tray 37, "person in charge-specific", "order reception date-specific", "task-specific", and "approval and disapproval-specific" are arranged in the item-specific extracting button 39 as label names indicating items. When the operator B operates the shared tray 37, the item-specific extracting button 39 is provided with "task-specific" and "delivery date-specific" as label names indicating items.

According to the present exemplary embodiment as described above, a method for extracting a document is variable in accordance with attributes of documents stored in a tray. Therefore, it may be easy for the user to extract a desired document from the tray.

(Second Exemplary Embodiment)

The present exemplary embodiment describes a mode in which a sub work area, including documents for each item extracted by an operation of an item-specific extracting button, is arranged in an appropriate position in a main work area.

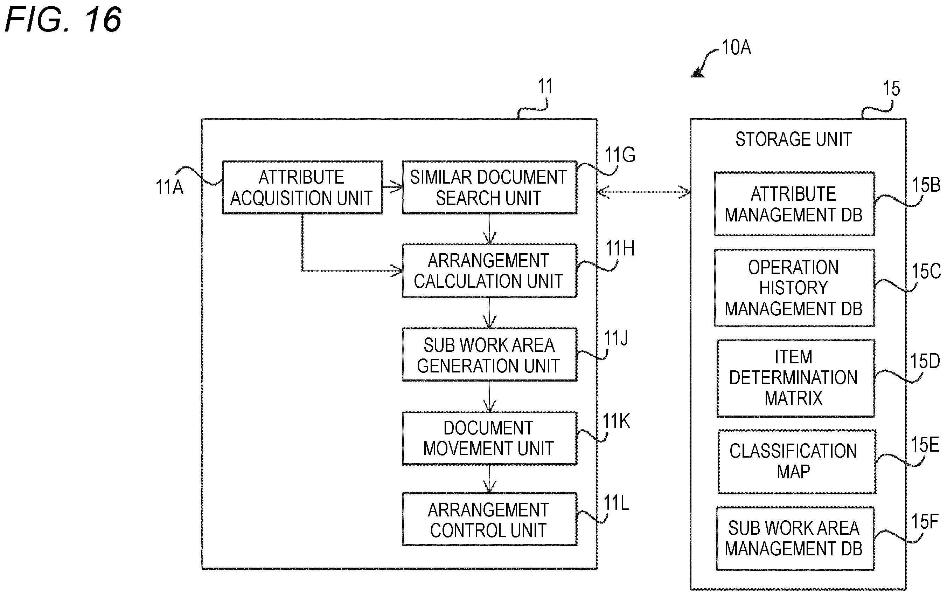

Fig. 16 is a block diagram showing an example of a functional configuration of an information processing apparatus 10A according to a second exemplary embodiment.

As shown in Fig. 16, the CPU 11 of the information processing apparatus 10A according to the present exemplary embodiment functions as the attribute acquisition unit 11A, a similar document search unit 11G, an arrangement calculation unit 11H, a sub work area generation unit 11J, a document movement unit 11K, and an arrangement control unit 11L.

The storage unit 15 according to the present exemplary embodiment stores the attribute management DB 15B, the operation history management DB 15C, the item determination matrix 15D, the classification map 15E, and a sub work area management DB 15F. The same components as those of the information processing apparatus 10 described in the first exemplary embodiment are denoted by the same reference numerals, and a repeated description thereof will be omitted.

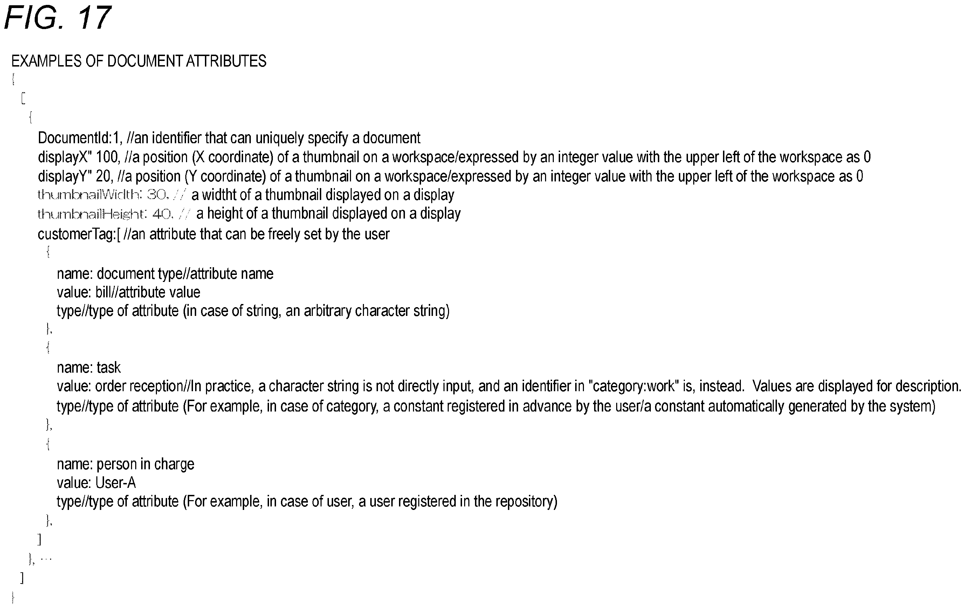

The attribute acquisition unit 11A acquires necessary information from the attribute management DB 15B. Document attributes are acquired by narrowing down information on storage destinations (for example, a specific main work area or a specific shared tray) of documents. The attributes to be acquired include attributes (for example, identifiers) automatically registered by the system in addition to attributes previously registered by a user in the documents. In addition, for documents in the main work area, information such as a display position of a thumbnail indicating the documents in the main work area and a size of the thumbnail is also acquired. Fig. 17 shows an example of document attribute information managed by the attribute management DB 15B.

Fig. 17 shows an example of document attribute information according to the second exemplary embodiment.

As shown in Fig. 17, the attributes of the documents include an attribute name, plural types of attribute values, a display position of a thumbnail, a size of a thumbnail, and the like. The attributes of the documents include "documentId", "displayX", "displayY", "thumbnailWidth", "thumbnailHeight", and "customerTag". The "documentId" indicates an identifier that uniquely identifies a document. "displayX" indicates a position (X coordinate) of a thumbnail on a workspace (= main work area), and is expressed by an integer value with the upper left of the workspace as 0 (zero). "displayY" indicates a position (Y coordinate) of the thumbnail on the workspace, and is expressed by an integer value with the upper left of the workspace as 0 (zero). "ThumbnailWidth" indicates the width of the thumbnail displayed on the display, and "ThumbnailHeight" indicates the height of the thumbnail displayed on the display. "CustomTag" indicates an attribute that may be arbitrarily set by the user.

As an attribute of a document, "name" indicates an attribute name (for example, a document type), "value" indicates an attribute value (for example, a bill), and "type" indicates a type of attribute (for example, string: an arbitrary character string).

In addition, as an attribute of a document, "name" indicates an attribute name (for example, task), "value" indicates an attribute value (for example, order reception), and "type" indicates a type of attribute (for example, category: work). Here, character strings are shown for convenience of description. When the type of attribute is "category: work", it indicates a constant registered in advance by the user or a constant automatically generated by the system.

In addition, as an attribute of a document, "name" indicates an attribute name (for example, a person in charge), "value" indicates an attribute value (for example, User-A), and "type" indicates a type of attribute (for example, user). When the type of the attribute is "user", the attribute indicates a user registered in the repository.

The similar document search unit 11G searches for a group of documents having attributes similar to attributes of documents included in the sub work area from among documents arranged in the main work area. The searching of similar documents may be replaced with an existing technique (for example, machine learning or artificial intelligence (AI)).

The arrangement calculation unit 11H calculates an optimum area for displaying the sub work area from the arrangement of documents on the main work area.

The sub work area generation unit 11J registers, in the sub work area management DB 15F, information such as an identifier of the sub work area, an identifier of the main work area that is a parent, a display position (X coordinate, Y coordinate), a title (for example, a label name), and a used classifying.

The document movement unit 11K updates storage destinations of documents. The attribute management DB 15B is accessed to register that documents stored in a tray have been moved to the sub work area.

The arrangement control unit 11L arranges the sub work area including the documents moved by the document movement unit 11K to the vicinity of documents in the main work area that have similar attributes to those of documents included in the sub work area. The arrangement control unit 11L notifies the user that the arrangement of the sub work area is completed. In addition, when there is no area for arranging the sub work area in the vicinity of the documents arranged in the main work area, the arrangement control unit 11L arranges the sub work area in a free area of the main work area. In this case, the arrangement control unit 11L performs control to display a message indicating that the sub work area is arranged in the free area of the main work area. That is, when the sub work area is arranged in an area away from an area where the similar documents are gathered, for example, an icon and a pop-up are also generated and displayed for understanding.

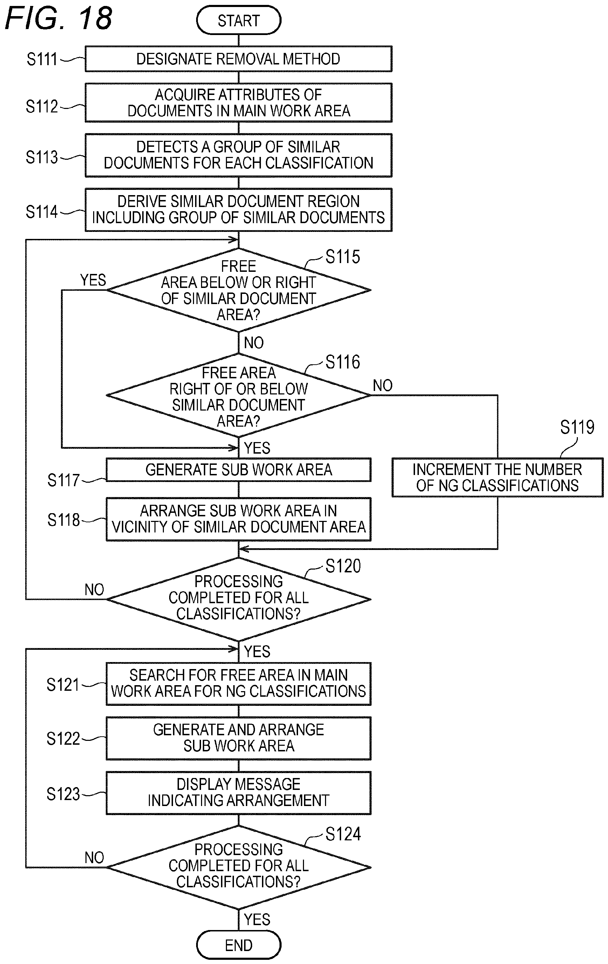

Next, the operation of the information processing apparatus 10A according to the second exemplary embodiment will be described with reference to Fig. 18.

Fig. 18 is a flowchart showing an example of a processing flow by the information processing program 15A according to the second exemplary embodiment.

First, when the information processing apparatus 10A is instructed to execute the sub work area arrangement processing, the information processing program 15A is activated by the CPU 11, and the following steps are executed.

In step S111 of Fig. 18, the CPU 11 receives a designation of a removal method. When the label name of the item-specific extracting button 33 is designated, an identifier (classificationId) of the classification map 15E associated with the label name is acquired. Here, "task-specific" of the item-specific extracting button 33 is designated. At this time, when there is a document in the tray that is not present in the classification map 15E, that is, when there is a newly arrived document, a document attribute of the newly arrived document is acquired and classified. An extracting method selected by the user is registered in the operation history management DB 15C. In addition, information such as the operating user, the identifier of the tray, and the operation date and time is registered together with the extracting method.

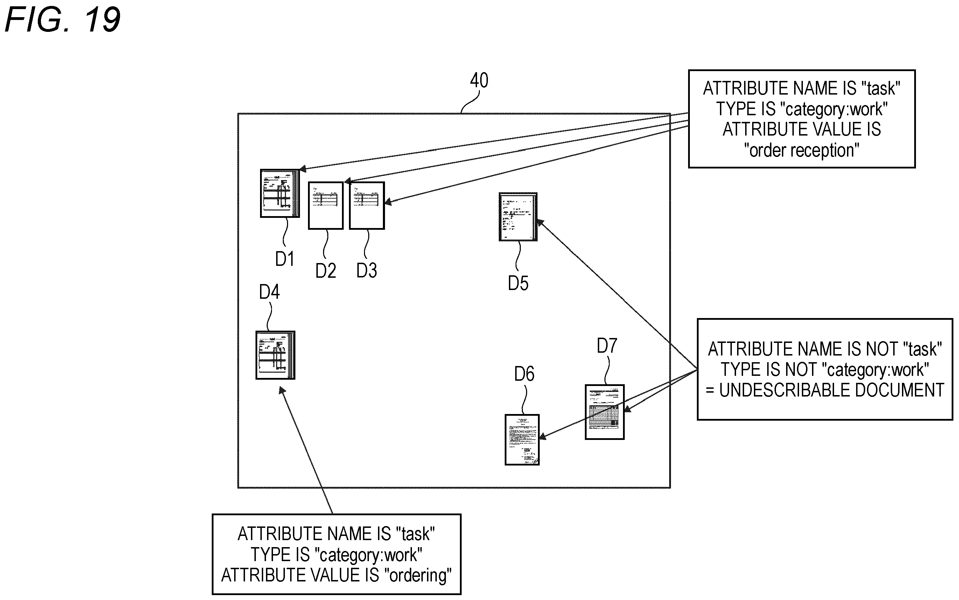

In step S112, the CPU 11 acquires attributes of the documents in the main work area. That is, a list of documents in the main work area currently displayed is acquired, and the attributes of the documents in the main work area are acquired. Then, for example, as shown in Fig. 19, the documents in the main work area are classified based on the extracting method (= label name) designated in step S111.

Fig. 19 shows a method for classifying the documents in the main work area according to the present exemplary embodiment.

In the main work area 40 shown in Fig. 19, documents D1 to D7 are displayed as thumbnails. Each of the documents D1 to D3 has an attribute in which an attribute name is "task", a type is "category: work", and an attribute value is "order reception". The document D4 has an attribute in which an attribute name is "task", a type is "category: work", and an attribute value is "ordering". The documents D5 to D7 have an attribute in which an attribute name is not "task" and a type is not "category: work", that is, an attribute of an undescribable document.

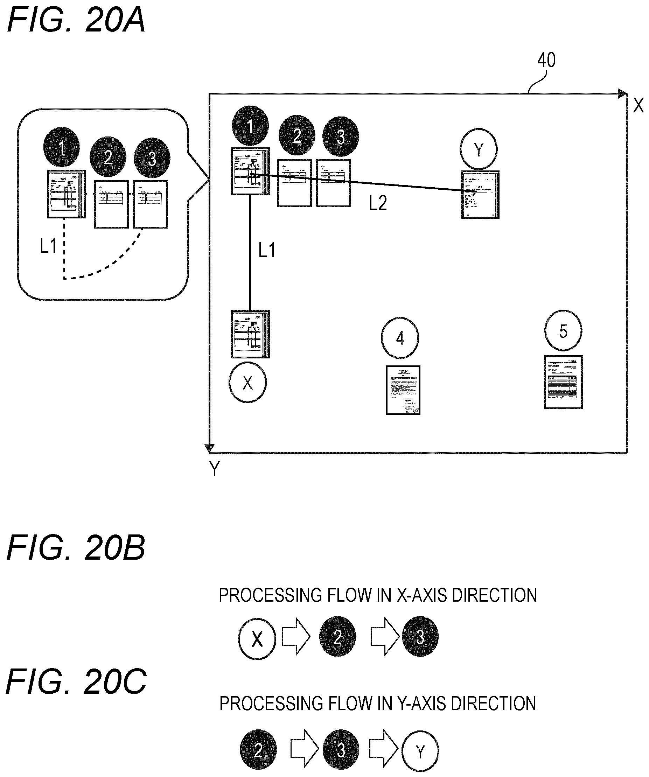

In step S113, the CPU 11 detects a group of similar documents for each classification. Specifically, the group of similar documents is obtained from attributes of nearby documents and a distance of display positions between the nearby documents and a document of interest. As a method for obtaining a group of similar documents, for example, a known technique (clustering or the like) may be adopted. Documents may be not correctly classified when the documents overlap at the same coordinates or when a wide variety of documents are intensively arranged. For this reason, it is desirable that the main work area is organized to some extent as a premise. In addition, when it takes time to perform the processing, a group of similar documents may be obtained in advance by batch processing at night or the like. Here, a group of similar documents is obtained as shown in Figs. 20A to 20c as an example.

Figs. 20A to 20C show a method for obtaining a group of similar documents according to the present exemplary embodiment.

The main work area 40 shown in Fig. 20A is expressed by a coordinate system in which the horizontal axis is the X-axis, the vertical axis is the Y-axis, and an upper left coordinate is (0, 0). Documents 1, 2, and 3 correspond to the documents D1, D2, and D3, respectively, a document X corresponds to the document D4, and documents Y, 4, and 5 correspond to the documents D5, D6, and D7, respectively.

First, the document 1 is regarded as a document of interest, and it is determined whether a document closest to the document 1 in the X-axis direction is classified into the same classification. When it is determined that the document is classified into the same classification, it is determined whether a next nearby document in the X-axis direction is classified into the same classification. Hereinafter, this is repeated in the X-axis direction. On the other hand, when it is determined that the classification is not the same, a distance L between documents of different classifications is obtained. In the example of Fig. 20A, a distance L1 between the document 1 and the document X is obtained, and all documents inside a circle having the distance L1 as a radius (when processing is performed from the upper left, it may be 1/4 of the circle) are acquired, and it is determined whether the documents belong to the same classifying. Similarly, a distance L2 between the document 1 and the document Y is obtained, all documents inside a circle having the distance L2 as a radius are acquired, and it is determined whether the documents are classified into the same classifying. The processing flow in the X-axis direction is in an order of the document X, the document 2, the document 3, and so on, as shown in Fig. 20B. When searching in the X-axis direction is completed for all documents, searching in the Y-axis direction is performed in the same manner. The processing flow in the Y-axis direction is in an order of the document 2, the document 3, the document Y, and so on, as shown in Fig. 20C. At this time, classified documents in the processing in the X-axis direction are skipped.

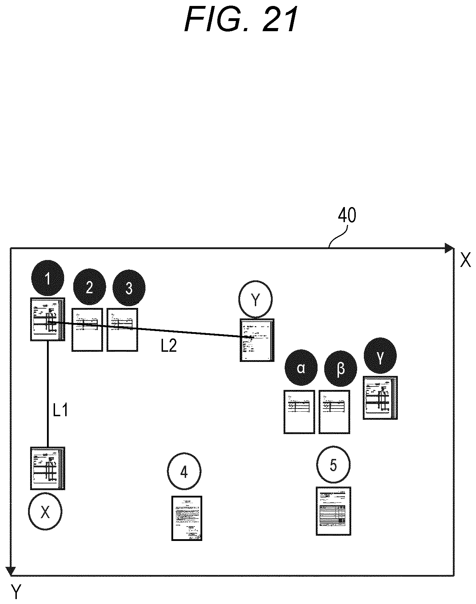

Fig. 21 shows another method for obtaining a group of similar documents according to the present exemplary embodiment.

As shown in Fig. 21, when documents of the same classifying are separate in the main work area 40, other document attributes are compared to search for attributes to be characterized with. In case of being characterized, it is determined as another similar document group.

In the example of Fig. 21, when the classification of the documents 1, 2, and 3 and the classification of documents α, β, and γ are compared, an attribute in which an attribute name is "task", a type is "category: work", and an attribute value is "order reception" matches. On the other hand, an attribute in which an attribute name is "person in charge" and a type is "user" does not match. In this case, documents may be characterized by the attribute in which the attribute name is "person in charge" and the type is "user". On the other hand, when the documents cannot be characterized, a group having a larger number of documents is set as a "representative of the similar document group". When it takes time to perform the processing, a group of similar documents may be obtained in advance by batch processing at night or the like as described above.

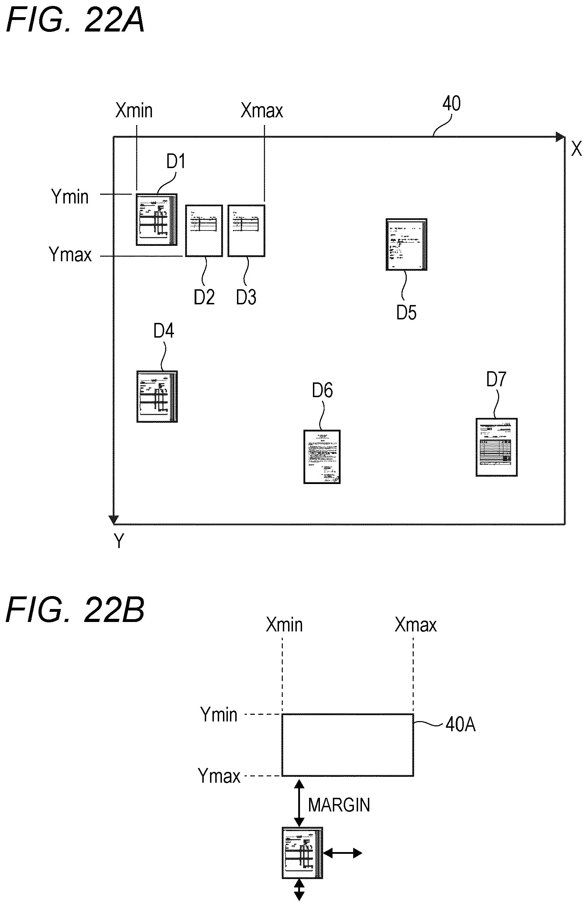

In step S114, the CPU 11 derives a similar document region including the group of similar documents. For example, as shown in Figs. 22A and 22B, the following processing is performed for each classification to obtain an area in which similar documents are gathered.

Figs. 22A and 22B show a method for deriving a similar document region according to the present exemplary embodiment.

In the main working area 40 shown in Fig. 22A, since the documents D1 to D3 are a group of similar documents, Ymin, Ymax, Xmin, and Xmax are determined for the documents D1 to D3. Ymin indicates a coordinate of an upper end of a thumbnail image of the document D1 having a minimum value in the Y-axis direction, and Ymax indicates a coordinate of a lower end of a thumbnail image of the document D2 having a maximum value in the Y-axis direction. Xmin indicates a coordinate of a left end of the thumbnail image of the document D1 having a minimum value in the X-axis direction, and Xmax indicates a coordinate of a right end of a thumbnail image of the document D3 having a maximum value in the X-axis direction. As shown in Fig. 22B, a similar document area 40A is obtained from values of Ymin, Ymax, Xmin, and Xmax. The similar document region 40A is represented as, for example, a rectangular area. When there is one similar document, the similar document region 40A is obtained from the size of the similar document.

In step S115, the CPU 11 determines whether there is a free area of a predetermined size or more below or to the right of the similar document area. When it is determined that there is a free area of a predetermined size or more (in a case of a positive determination), the processing proceeds to step S117, and when it is determined that there is no free area of a predetermined size or more (in a case of a negative determination), the processing proceeds to step S116. Specifically, the height and width of the similar document region 40A obtained in step S114 are obtained. At this time, if the width is larger than the height, searching is performed under the similar document area 40A, that is, in the Y-axis direction, since the area is a horizontally long rectangular area, and if the height is larger than the width, searching is performed to the right of the similar document area 40A, that is, in the X-axis direction, since the area is a vertically long rectangular area. In each search direction, as an example shown in Fig. 22B described above, it is determined whether there is a document within a predetermined size calculated based on a margin determined by the system and the height and width of the thumbnail image. In this case, if there is a document within the predetermined size, it is determined that there is no free area, and if there is no document within the predetermined size, it is determined that there is a free area. In a case of a system in which the height and width of the thumbnail image are variable, a standard thumbnail image (for example, an A4 size document) may be used, or the height and width of a thumbnail image of a document to be extracted from a tray may be used.

In step S116, the CPU 11 determines whether there is a free area of a predetermined size or more to the right or below the similar document area. When it is determined that there is a free area of a predetermined size or more (in a case of a positive determination), the processing proceeds to step S117, and when it is determined that there is no free area of a predetermined size or more (in a case of a negative determination), the processing proceeds to step S119. If the width > the height, searching is performed to the right of the similar document region 40A, that is, in the X-axis direction, and if the height > the width, searching is performed below the similar document region 40A, that is, in the Y-axis direction. In step S116, the same searching as in step S115 is performed by changing directions of axes.

In step S117, the CPU 11 generates a sub work area. Specifically, a title of the sub work area is determined. For example, when the attribute name is "task", the type is "category: work", and the attribute value is "order reception", the title is determined as [task: order reception] or the like. Then, the size of the sub work area, that is, the height and the width are determined according to the number of documents extracted from the tray.

In step S118, for example, the CPU 11 arranges the sub work area in the vicinity of the similar document area by using the identifier (ClassificationId) of the classification map 15E described above. At this time, information such as the identifier of the sub work area, the display position (X coordinate, Y coordinate), the title, and the used classification is registered in the sub work area management DB 15F.

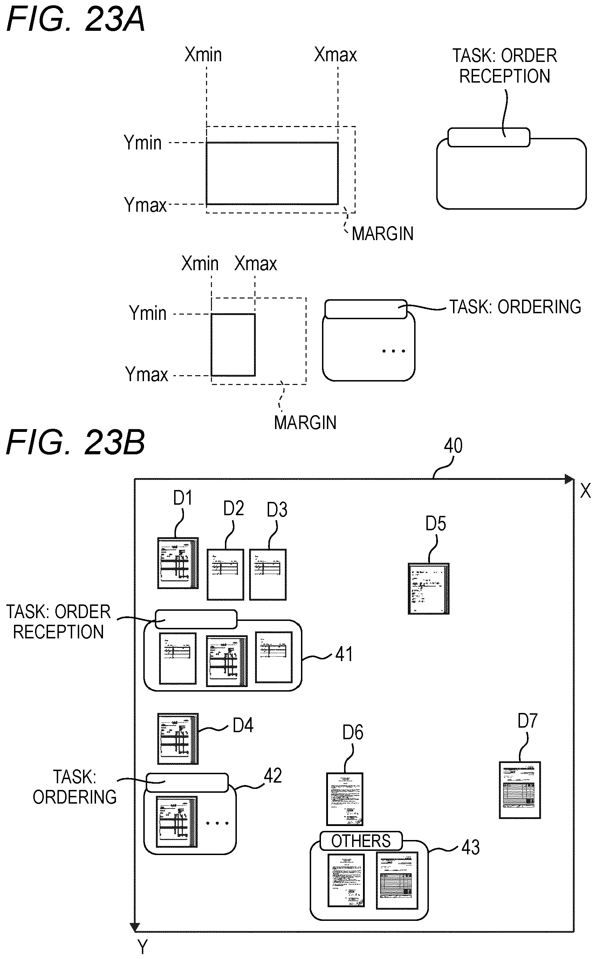

Figs. 23A and 23B show a method for generating and arranging the sub work area according to the present exemplary embodiment.

In the example of Fig. 23A, the size of the sub work area is determined to satisfy the following condition. (Condition 1) A maximum value of the width is the width of a rectangular region defined by Ymin, Ymax, Xmin, and Xmax + margin. However, when all the documents in the tray cannot be extracted with the size of the width of the rectangular region defined by Ymin, Ymax, Xmin, and Xmax + margin, the width of a rectangular region of a representative similar document + abbreviation symbol "..." is used. (Condition 2) A maximum value of the height is the height of the rectangular region defined by Ymin, Ymax, Xmin, and Xmax + margin. (Condition 3) The sub work area does not overlap with rectangular regions of other classifications.

In the main working area 40 shown in Fig. 23B, sub work areas 41 to 43 are arranged to satisfy the conditions 1 to 3. The sub work area 41 is arranged in the vicinity of a similar document area including the documents D1 to D3, the sub work area 42 is arranged in the vicinity of a similar document area including the document D4, and the sub work area 43 is arranged in the vicinity of a similar document area including the document D6.

In step S119, the CPU 11 increments the number of NG (No Good) classifications that are the target classifications in which the sub work area cannot be generated. The number of NG classifications is registered in the system.

In step S120, the CPU 11 determines whether the processing has been completed for all the classifications. When it is determined that the processing has been completed for all the classifications (in a case of a positive determination), the processing proceeds to step S121, and when it is determined that the processing has not been completed for all the classifications (in a case of a negative determination), the processing returns to step S115 to repeat the processing.

In step S121, the CPU 11 searches for a free area in the main work area for the NG classifications. Specifically, the following processing is executed in order.

(1) Maximum values of coordinates in the X-axis direction and the Y-axis direction are acquired for all the documents. The processing is executed in order from a document having smallest maximum values of the coordinates. For example, when the width of a document > the height of the document, the searching is executed from a lower side of the document. (2) The same free area searching processing as in step S115 is performed. At this time, when a document or a sub work area is arranged, a lower or further right side of the area is searched. A maximum value of the coordinates in the searching direction is acquired, and when the maximum value is relatively large, the determination result is NG. (3) The same free area searching processing as in step S116 is performed.

In step S122, the CPU 11 performs sub work area generation processing similar to that in step S117, and arranges the generated sub work area in the free area in the main work area obtained by the searching in step S121.

In step S123, the CPU 11 performs control to display a message indicating that the sub work area is arranged at a place away from the similar document area. That is, since the sub work area is not arranged in the vicinity of the similar document area, it is not known that the sub work area is arranged somewhere at first glance. Therefore, an icon, a link, or the like is used to explicitly indicate that the sub work area is arranged.

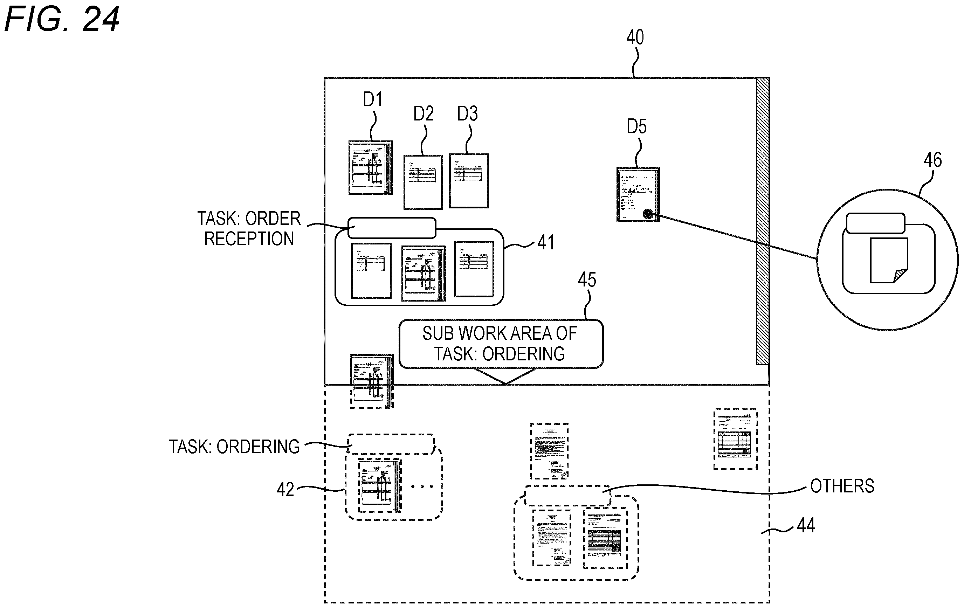

Fig. 24 shows a method for arranging the sub work area according to the present exemplary embodiment.

The main work area 40 shown in Fig. 24 includes a non-display area 44 which is not displayed on the screen and is displayed in response to a screen scroll operation.

For example, although the sub work area 42 having a title of [task: ordering] is arranged in the non-display area 44, the user cannot know the sub work area 42 at first glance. For this reason, a pop-up 45 is displayed in the main work area 40 being displayed. When the corresponding sub work area 42 is displayed on the screen, the display of the pop-up 45 disappears. When the sub work area 42 is displayed or operated, or when a document in the sub work area 42 is displayed or operated, the pop-up 45 disappears. In addition, when the pop-up 45 is pressed, the scroll is automatically performed to a place where the sub work area 42 is present.

In addition, for example, when a corresponding classification document (for example, the document D5) is displayed on the screen of the main work area 40, an icon 46 indicating a corresponding sub work area is displayed. This is effective when the classification of documents on the screen is stored. When the icon 46 is pressed, the scroll is automatically performed to a place where the sub work area is present. When plural sub work areas are allocated to one document, it is possible to select a sub work area to be displayed by the mouse-over operation on the icon 46.

In step S124, the CPU 11 determines whether the processing has been completed for all the NG classifications. When it is determined that the processing has not been completed for all the NG classifications (in a case of a negative determination), the processing returns to step S121 to repeat the processing, and when it is determined that the processing has been completed for all the NG classifications (in a case of a positive determination), the series of processing by the information processing program 15A is completed.

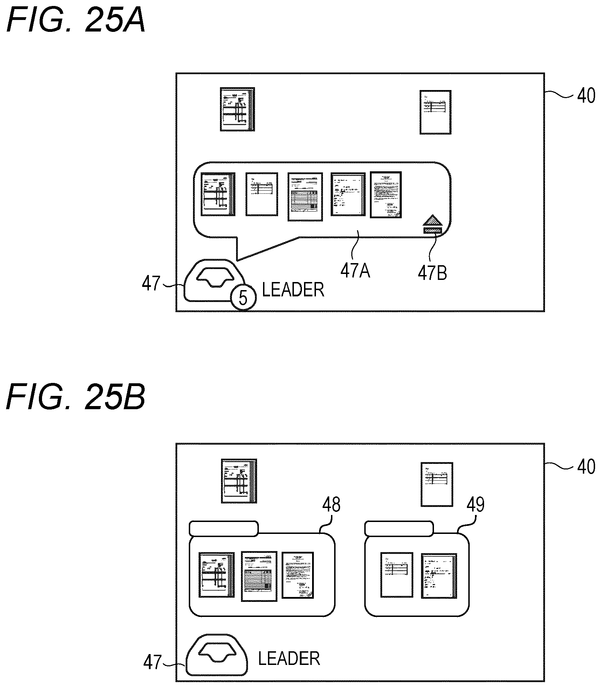

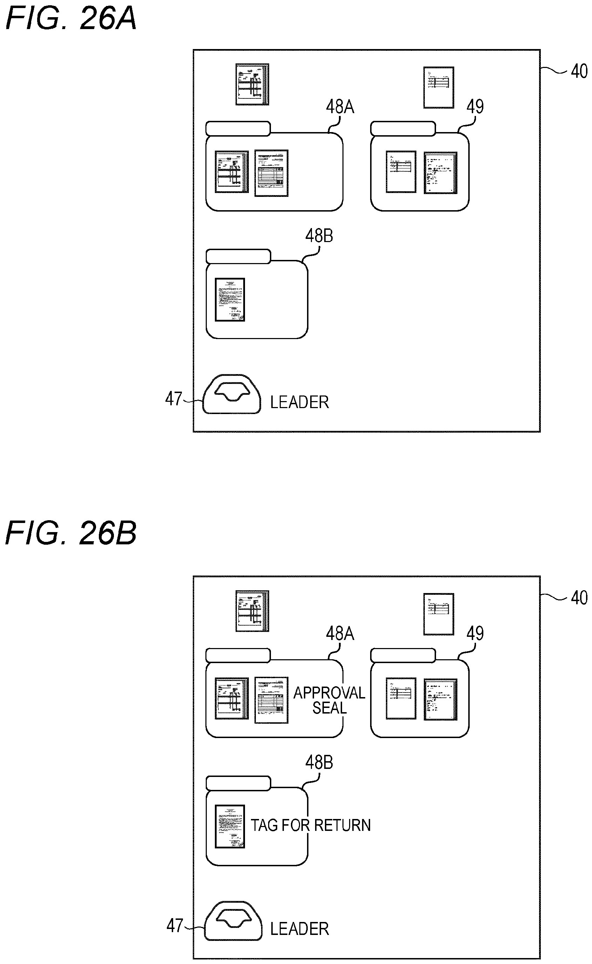

Next, with reference to Figs. 25A, 25B, 26A and 26B, a case where the document management system according to the present exemplary embodiment is applied to an approval task will be specifically described.

Figs. 25A and 25B are front views of the main work area 40 when applied to the approval task according to an example of the present exemplary embodiment. In the example of Figs. 25A and 25B, a personal tray 47 is provided and may be operated by the leader.

In Fig. 25A, the CPU 11 performs control to display the main work area 40 in which some documents are arranged on the terminal apparatus 20 of the leader. In the main work area 40, the personal tray 47 is displayed as an icon image. On the personal tray 47, "5" is displayed as the number of newly arrived (unprocessed) documents. In response to the mouse-over operation on the personal tray 47, a thumbnail image 47A of the documents stored in the personal tray 47 is displayed, and an extracting-all button 47B for extracting all the documents in the personal tray 47 to the main work area 40 is displayed. In response to the mouse-over operation on the extracting-all button 47B, the display of the extracting-all button 47B is changed, and an item-specific extracting button (not shown) is displayed in the main work area 40.

Fig. 25B shows a step subsequent to that shown in Fig. 25A. In Fig. 25B, the CPU 11 performs control to display sub work areas 48 and 49 including documents extracted by the operation of the item-specific extracting button in the main work area 40. The sub work area 48 is an area including three documents of the five newly arrived documents, and the sub work area 49 is an area including two documents of the five newly arrived documents.

Figs. 26A and 26B are front views of the main work area 40 when applied to the approval task according to another example of the present exemplary embodiment.

In Fig. 26A, the leader checks the content of the documents included in the sub work area 48, and manually classifies the documents into either approval or return. As a result of the classification, a sub work area 48A for approval and a sub work area 48B for return are generated.

Fig. 26B shows a step subsequent to that shown in Fig. 26A. In Fig. 26B, approval seals are given to documents included in the sub work area 48A for approval, the approved documents are returned to the original shared tray. A tag for return is given to a document included in the sub work area 48B for returning, and the document with the tag for return is returned to the original shared tray.

In this way, according to the present exemplary embodiment, the sub work area is arranged in the vicinity of the similar document in the main work area. For this reason, as compared with a case where all documents extracted from the tray are directly arranged in the main work area, it is easy to organize the documents in the main work area.

In the information processing apparatus according to the exemplary embodiment of the present disclosure, the main work area may include a non-display area that is not displayed until a scroll operation is performed, and the free area may be present in the non-display area.

According to the above aspect, the sub work area may be arranged in the non-display area.

In the exemplary embodiments above, the term "processor" refers to hardware in a broad sense. Examples of the processor include general processors (e.g., CPU: Central Processing Unit) and dedicated processors (e.g., GPU:

Graphics Processing Unit, ASIC: Application Specific Integrated Circuit, FPGA: Field Programmable Gate Array, and programmable logic device).

In the exemplary embodiments above, the term "processor" is broad enough to encompass one processor or plural processors in collaboration which are located physically apart from each other but may work cooperatively. The order of operations of the processor is not limited to one described in the exemplary embodiments above, and may be changed.

The information processing apparatus according to the exemplary embodiments has been described above as an example. The exemplary embodiments may be in a form of a program that causes a computer to execute functions of units included in the information processing apparatus. The exemplary embodiments may be in a form of a non-transitory computer readable medium storing programs.

In addition, the configuration of the information processing apparatus described in the above exemplary embodiments is an example, and may be changed according to the situation within a range not departing from the gist.

The processing flow of the program described in the above exemplary embodiments is also an example, and unnecessary steps may be deleted, new steps may be added, or the processing order may be changed within a range not departing from the gist.

In addition, in the above-described exemplary embodiments, a case in which the processing according to the exemplary embodiments is implemented by a software configuration using a computer by executing a program has been described, and the present disclosure is not limited thereto. The exemplary embodiments may be implemented by, for example, a hardware configuration or a combination of a hardware configuration and a software configuration.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

**Claims**

1. An information processing apparatus comprising a processor configured to:

   display an operator associated with an extracting operation to extract a plurality of documents stored in a storage area from the storage area, each of the plurality of documents being associated with an attribute in advance; and
   associate the operator with a classifying operation to classify the plurality of documents stored in the storage area and the extracting operation using an item that changes according to the attribute of each of the plurality of documents stored in the storage area.

2. The information processing apparatus according to claim 1, wherein

   the operator indicates a label name indicating the item, and
   the processor is configured to change the label name of the operator in accordance with a change in the item.

3. The information processing apparatus according to either claim 1 or claim 2, wherein
   the processor is configured to display, in a main work area in which a document is arranged and a work is performed on the arranged document, a sub work area that includes a document for each item extracted by an operation with the operator and that is smaller than the main work area.

4. The information processing apparatus according to any of the preceding claims, in particular claim 3, wherein
   the processor is configured to display the sub work area arranged in a vicinity of a document that is arranged in the main work area and that has an attribute similar to an attribute of the document included in the sub work area.

5. The information processing apparatus according to any of the preceding claims, in particular claim 4, wherein,
   in a case where there is no area for arranging the sub work area in the vicinity of the document arranged in the main work area, the processor is configured to display the sub work area arranged in a free area in the main work area and a message indicating that the sub work area is arranged in the free area in the main work area.

6. The information processing apparatus according to any of the preceding claims, in particular any one of claims 3 to 5, wherein
the processor is configured to display an image representing the storage area in the main work area so as to be selectable.

7. An information processing program causing a computer to execute a process, the process comprising:

displaying an operator associated with an extracting operation to extract a plurality of documents stored in a storage area from the storage area, each of the plurality of documents being associated with an attribute in advance; and
associating the operator with a classifying operation to classify the plurality of documents stored in the storage area and the extracting operation using an item that changes according to the attribute of each of the plurality of documents stored in the storage area.

8. An information processing apparatus, comprising a processor configured to:

extract a document from a storage area in which a plurality of documents are stored, each of the plurality of documents being associated with an attribute in advance, and
display a sub work area including the extracted document arranged in a vicinity of a document that is arranged in a main work area larger than the sub work area and has an attribute similar to an attribute of the document included in the sub work area.

9. The information processing apparatus according to claim 8, wherein

the processor is configured to extract, from the storage area, a document classified for each item according to an attribute of each of the plurality of documents, and
the sub work area includes the extracted document for each item.

10. The information processing apparatus according to either claim 8 or claim 9, wherein

the processor is configured to display an operator associated with an operation of extracting a document from the storage area for each item, the operator being configured to display a label name indicating the item, and
the sub work area includes the document for each item that is extracted by an operation of the operator.

11. The information processing apparatus according to any of the preceding claims, in particular claim 2 or claim 9, wherein,
in a case where the number of items is larger than a maximum number of items that is allocatable to the operator, the processor is configured to display, on the operator, a label name indicating at least one item selected from the items in descending order of priority of the items.

12. The information processing apparatus according to any of the preceding claims, in particular claim 3 or claim 10, wherein

the attribute includes an attribute name and a plurality of types of attribute values, and
the processor is configured to

acquire, from the storage area, the number of classifiable documents for each attribute name and an index value indicating a degree of variation of the plurality of types of attribute values for each attribute name, and
determine the priority of the items based on at least one of the number of classifiable documents for each attribute name and the index value acquired for each attribute name.

13. The information processing apparatus according to any of the preceding claims, in particular claim 3 or claim 10, wherein

the attribute includes an attribute name and a plurality of types of attribute values,
the storage area is accessible by a plurality of users, and
the processor is configured to

acquire an operation history of each user indicating the number of times the user performs the extracting operation for the attribute name of the document, from all storage area accessible by a user that is accessing the storage area, and

determine the priority of the items based on the acquired operation history of each user.

14. The information processing apparatus according to any of the preceding claims, in particular claim 3 or claim 10, wherein

the attribute includes an attribute name and a plurality of types of attribute values,
the storage area is accessible by a plurality of users, and
the processor is configured to

acquire an operation history of each user indicating the number of times the user performs the extracting operation for the attribute name of the document, from all storage area accessible by a user that is accessing the storage area,
acquire an operation history of each storage area indicating the number of times the extracting operation is performed for the attribute name of the document, from each storage area, and
determine the priority of the items based on the acquired operation history of each user and the acquired operation history of each storage area.

15. The information processing apparatus according to any of the preceding claims, in particular claim 3 or claim 10, wherein

the attribute includes an attribute name and a plurality of types of attribute values,
the storage area is accessible by a plurality of users,
the processor is configured to

acquire, from the storage area, the number of classifiable documents for each attribute name and an index value indicating a degree of variation of the plurality of types of attribute values for each attribute name,
acquire an operation history of each user indicating the number of times the user performs the extracting operation for the attribute name of the document, from all storage area accessible by a user that is accessing the storage area,
acquire an operation history of each storage area indicating the number of times the extracting operation is performed for the attribute name of the document, from each the storage area, and
determine the priority of the items based on at least one of the acquired number of classifiable documents for each attribute name, the acquired index value for each attribute name, the acquired operation history of each user, and the acquired operation history of each storage area.

# FIG. 1

10

**INFORMATION PROCESSING APPARATUS**

15

**STORAGE UNIT**

11

CPU

INFORMATION PROCESSING PROGRAM

15A

12

ROM

I/O

13

RAM

DISPLAY UNIT 16

OPERATION INPUT UNIT 17

COMMUNICATION UNIT 18

14

100

N

TERMINAL APPARATUS

20A

TERMINAL APPARATUS

20B

• • •

## FIG. 2

EP 4 060 518 A1

# FIG. 3

EXAMPLES OF DOCUMENT ATTRIBUTES

```
{
  [
    {
      DocumentId:1, //an identifier that can uniquely specify a document
      sendBy:"User-A", //an identifier of a transmission source (a user, a multifunction machine, an automatic script) of the document
      sendDate: 2020-12-03-10:00:00:000 //date and time of storage in the tray
      customerTag:[ //an attribute that can be freely set by the user
        {
          name: document type//attribute name
          value: bill//attribute value
          type//type of attribute (in case of string, an arbitrary character string)
        },
        {
          name: task
          value: order reception//In practice, a character string is not directly input, and an identifier in "category:work" is, instead. Values are displayed for description.
          type//type of attribute (For example, in case of category, a constant registered in advance by the user/a constant automatically generated by the system)
        },
        {
          name: person in charge
          value: User-A
          type//type of attribute (For example, in case of user, a user registered in the repository)
        },
      ]
    }, ···
  ]
}
```

```
category:work
1: order reception
2: ordering
```

EP 4 060 518 A1

## FIG. 4A

15D

| ITEM | CLASSIFICATION IDENTIFIER (ClassificationId) | THE NUMBER OF CLASSIFIABLE DOCUMENTS | VARIATION (STANDARD DEVIATION) | OPERATION HISTORY OF EACH USER | OPERATION HISTORY OF EACH TRAY | USER SETTING | RESULT (DISPLAY PRIORITY) |
|---|---|---|---|---|---|---|---|
| ATTRIBUTE NAME IS "document type" AND TYPE IS "string (CHARACTER STRING)" | 1 | 50 | 22.87 | 0 | 3/30 | - | 3 |
| ATTRIBUTE NAME IS "task" AND THE TYPE IS "category:work (SPECIFIC CATEGORY)" | 2 | 80 | 12.47 | 28/30 | 18/30 | - | 1 |
| ATTRIBUTE NAME IS "person in charge" AND TYPE IS "user" | 3 | 100 | 5.72 | 2/30 | 9/30 | - | 2 |

## FIG. 4B

15D

| ITEM | CLASSIFICATION IDENTIFIER (ClassificationId) | THE NUMBER OF CLASSIFIABLE DOCUMENTS | VARIATION (STANDARD DEVIATION) | OPERATION HISTORY OF EACH USER | OPERATION HISTORY OF EACH TRAY | USER SETTING | RESULT (DISPLAY PRIORITY) |
|---|---|---|---|---|---|---|---|
| ATTRIBUTE NAME IS "document type" AND TYPE IS "string (CHARACTER STRING)" | 1 | 50 | 22.87 | 0 | 3/30 | O | 1 |
| ATTRIBUTE NAME IS "task" AND THE TYPE IS "category:work (SPECIFIC CATEGORY)" | 2 | 80 | 12.47 | 28/30 | 18/30 | - | 2 |
| ATTRIBUTE NAME IS "person in charge" AND TYPE IS "user" | 3 | 100 | 5.72 | 2/30 | 9/30 | - | 3 |

EP 4 060 518 A1

# FIG. 5

15E

| IDENTIFIER (ClassificationId) | GROUP OF ATTRIBUTE VALUES | REMARKS |
|---|---|---|
| 1 | {<br>  name: 'document type'<br>  type: 'string'<br>  data: [<br>    {<br>      attributeValue: "bill"<br>      documentIds : [1, 2, 3, ···, 49]<br>    },<br>    {<br>      attributeValue: "estimate"<br>      documentIds : [50]<br>    },<br>    {<br>      attributeValue:<br>      documentIds : [51, 52, 53, ···, 100]<br>    },<br>  ]<br>} | ATTRIBUTE NAME IS "document type" TYPE IS "string (character string)"<br><br>"system:other" refers to an undescribable document. |
| 2 | {<br>  name: 'task'<br>  type: 'category:work'<br>  data: [<br>    {<br>      attributeValue: "order reception"<br>      documentIds : [1, 5, 8, ···, 25]<br>    },<br>    {<br>      attributeValue: "ordering"<br>      documentIds : [2, 3, 4, ···, 80]<br>    },<br>    [<br>      attributeValue: "system:other",<br>      documentIds : [9, 10, 60, ···, 100]<br>    },<br>  ]<br>} | ATTRIBUTE NAME IS "document type" TYPE IS "string (character string)"<br><br>"system:other" refers to an undescribable document. |

EP 4 060 518 A1

## FIG. 6A

31A    31B    31    30

## FIG. 6B

PERSON IN CHARGE-SPECIFIC    33

RECEPTION
DATE-SPECIFIC

DOCUMENT
NAME-SPECIFIC

TASK-SPECIFIC

## FIG. 6C

PERSON IN CHARGE-SPECIFIC    33

RECEPTION
DATE-SPECIFIC

DOCUMENT
NAME-SPECIFIC

TASK-SPECIFIC

# FIG. 7

# FIG. 8

## FIG. 9A

PERSON IN
CHARGE-SPECIFIC

33

RECEPTION
DATE-SPECIFIC

DOCUMENT
NAME-SPECIFIC

OTHERS

ORDER
RECEPTION

ORDERING

TASK-SPECIFIC

## FIG. 9B

PERSON IN
CHARGE-SPECIFIC

33

RECEPTION
DATE-SPECIFIC

DOCUMENT
NAME-SPECIFIC

YES-
TER-
DAY

TODAY

TASK-SPECIFIC

# FIG. 10

START

S101 — ACQUIRE ATTRIBUTES
OF DOCUMENTS IN TRAY

S102 — CLASSIFY DOCUMENTS IN TRAY AND
AGGREGATE DOCUMENT ATTRIBUTES

S103 — THE
NUMBER OF
CLASSIFICATION ITEMS > MAXIMUM
NUMBER OF
ITEMS?

NO

YES

S104 — ACQUIRE OPERATION
HISTORY OF EACH USER

S105 — ACQUIRE OPERATION
HISTORY OF EACH TRAY

S106 — ITEM CALCULATION

S107 — DETERMINE DISPLAY PRIORITY

S108 — SELECT ITEM IN ACCORDANCE
WITH DISPLAY PRIORITY

S109 — GENERATE LABEL NAME
INDICATING ITEM

S110 — ARRANGE AND DISPLAY
LABEL NAME IN BUTTON

END

# FIG. 11

ATTRIBUTE NAME IS "document type"
TYPE IS "string (character string)"

33

ATTRIBUTE NAME IS "task"
TYPE IS "category:work"

# FIG. 12

DOCUMENT
TYPE-SPECIFIC

33

TASK-SPECIFIC

# FIG. 13

EP 4 060 518 A1

# FIG. 14

MULTIPLE RECEIPTS       ESTIMATES AND THE ORDER SHEETS ARE ABOUT HALF AND HALF

ITEM-SPECIFIC

DATE-SPECIFIC      WAITING FOR PAYMENT

COPY OF SENDING MATERIAL

DOCUMENT TYPE-SPECIFIC

RECEPTION DATE-SPECIFIC      AGREED

DELIVERY DATE-SPECIFIC

EP 4 060 518 A1

# FIG. 15

IN CASE OF OPERATOR A

IN CASE OF OPERATOR B

PERSON IN CHARGE-SPECIFIC

ORDER RECEPTION DATE-SPECIFIC

APPROVAL AND DISAPPROVAL-SPECIFIC

TASK-SPECIFIC

TASK-SPECIFIC

DELIVERY DATE-SPECIFIC

*FIG. 16*

## FIG. 17

EXAMPLES OF DOCUMENT ATTRIBUTES

```
{
  [
    {
      DocumentId:1, //an identifier that can uniquely specify a document
      displayX" 100, //a position (X coordinate) of a thumbnail on a workspace/expressed by an integer value with the upper left of the workspace as 0
      displayY" 20, //a position (Y coordinate) of a thumbnail on a workspace/expressed by an integer value with the upper left of the workspace as 0
      thumbnailWidth: 30. // a widtht of a thumbnail displayed on a display
      thumbnailHeight: 40. // a height of a thumbnail displayed on a display
      customerTag:[ //an attribute that can be freely set by the user
        {
          name: document type//attribute name
          value: bill//attribute value
          type//type of attribute (in case of string, an arbitrary character string)
        },
        {
          name: task
          value: order reception//In practice, a character string is not directly input, and an identifier in "category:work" is, instead.  Values are displayed for description.
          type//type of attribute (For example, in case of category, a constant registered in advance by the user/a constant automatically generated by the system)
        },
        {
          name: person in charge
          value: User-A
          type//type of attribute (For example, in case of user, a user registered in the repository)
        },
      ]
    }, ...
  ]
}
```

## FIG. 18

START

S111 — DESIGNATE REMOVAL METHOD

S112 — ACQUIRE ATTRIBUTES OF DOCUMENTS IN MAIN WORK AREA

S113 — DETECTS A GROUP OF SIMILAR DOCUMENTS FOR EACH CLASSIFICATION

S114 — DERIVE SIMILAR DOCUMENT REGION INCLUDING GROUP OF SIMILAR DOCUMENTS

S115 FREE AREA BELOW OR RIGHT OF SIMILAR DOCUMENT AREA?
— YES
— NO

S116 FREE AREA RIGHT OF OR BELOW SIMILAR DOCUMENT AREA?
— NO
— YES

S119 INCREMENT THE NUMBER OF NG CLASSIFICATIONS

S117 — GENERATE SUB WORK AREA

S118 — ARRANGE SUB WORK AREA IN VICINITY OF SIMILAR DOCUMENT AREA

S120 PROCESSING COMPLETED FOR ALL CLASSIFICATIONS?
— NO
— YES

S121 — SEARCH FOR FREE AREA IN MAIN WORK AREA FOR NG CLASSIFICATIONS

S122 — GENERATE AND ARRANGE SUB WORK AREA

S123 — DISPLAY MESSAGE INDICATING ARRANGEMENT

S124 PROCESSING COMPLETED FOR ALL CLASSIFICATIONS?
— NO
— YES

END

*FIG. 19*

ATTRIBUTE NAME IS "task"
TYPE IS "category:work"
ATTRIBUTE VALUE IS
"order reception"

ATTRIBUTE NAME IS NOT "task"
TYPE IS NOT "category:work"
= UNDESCRIBABLE DOCUMENT

40

D7

D5

D6

D3

D2

D1

D4

ATTRIBUTE NAME IS "task"
TYPE IS "category:work"
ATTRIBUTE VALUE IS "ordering"

## FIG. 20A

## FIG. 20B

PROCESSING FLOW IN X-AXIS DIRECTION

## FIG. 20C

PROCESSING FLOW IN Y-AXIS DIRECTION

# FIG. 21

## FIG. 22A

## FIG. 22B

## FIG. 23A

TASK: ORDER RECEPTION

TASK: ORDERING

## FIG. 23B

TASK: ORDER RECEPTION

TASK: ORDERING

OTHERS

# FIG. 24

TASK: ORDER RECEPTION

SUB WORK AREA OF TASK: ORDERING

TASK: ORDERING

OTHERS

D1  D2  D3  D5

40  41  42  44  45  46

## FIG. 25A

## FIG. 25B

## FIG. 26A

40

48A

49

48B

47 LEADER

## FIG. 26B

40

48A

APPROVAL
SEAL

49

48B

TAG FOR RETURN

47 LEADER

Europäisches
Patentamt
European
Patent Office
Office européen
des brevets

# EUROPEAN SEARCH REPORT

Application Number

EP 21 19 5572

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/065668 A1 (SPENCE JEANINE E [US] ET AL) 13 March 2008 (2008-03-13) * paragraphs [0005], [0007], [0040] – [0042], [0044], [0046] – [0049], [0051] – [0053], [0057] – [0059], [0064], [0075], [0097], [0098] * * figures 1-3, 6 * | 1-15 | INV. G06F16/335 G06F16/93 |
| X | JP H11 120202 A (RICOH KK) 30 April 1999 (1999-04-30) * figures 8-10 * | 1-15 | |
| X | JP 6 357754 B2 (FUJI XEROX CO LTD) 18 July 2018 (2018-07-18) * figures 5-8 * | 1-15 | |

TECHNICAL FIELDS
SEARCHED     (IPC)

G06F

The present search report has been drawn up for all claims

| Place of search | Date of completion of the search | Examiner |
|---|---|---|
| The Hague | 8 February 2022 | Martínez Espuche, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 19 5572

This annex lists the patent family members relating to the patent documents cited in  the above-mentioned European search report.
The members are as contained in the European Patent Office EDP file on
The European Patent Office is in no way liable for these particulars which are merely given for the purpose of information.

08-02-2022

| Patent document cited in search report | | Publication date | Patent family member(s) | | Publication date |
|---|---|---|---|---|---|
| US 2008065668 | A1 | 13-03-2008 | US | 2008065668 A1 | 13-03-2008 |
|  |  |  | US | 2011125756 A1 | 26-05-2011 |
| JP H11120202 | A | 30-04-1999 | NONE | | |
| JP 6357754 | B2 | 18-07-2018 | JP | 6357754 B2 | 18-07-2018 |
|  |  |  | JP | 2015075919 A | 20-04-2015 |

EPO FORM P0459

For more details about this annex : see Official Journal of the European Patent Office, No. 12/82

**REFERENCES CITED IN THE DESCRIPTION**

**Patent documents cited in the description**

- JP 6357754 B
- JP 2005004419 A